# EUROPEAN PATENT SPECIFICATION

(11) **EP 3 054 519 B1**
(45) Date of publication and mention of the grant of the patent: **08.11.2017**
(21) Application number: 15153616.6
(22) Date of filing: 03.02.2015
(51) Int. Cl.: H01M 8/18, C07C 1/02, C25B 1/04

(54) **Reversible fuel cell system and method for operating a fuel cell system**
Reversibles Brennstoffzellensystem und Verfahren zum Betrieb eines Brennstoffzellensystems
Système de pile à combustible réversible et procédé de contrôle d'un tel système

(43) Date of publication of application: 10.08.2016
(73) Proprietor: Technische Universität München, 80333 München (DE)
(72) Inventor: Herrmann, Stephan, 81925 München (DE); Spliethoff, Hartmut, 82140 Olching (DE); Gaderer, Matthias, 83373 Taching (DE)
(74) Representative: Hoefer & Partner Patentanwälte mbB

(56) References cited:
- WO-A2-2004/086585
- BUTTLER, A. ET AL.: "a detailed techno-economic analysis of heat integration in high temperature electrolysis for efficient hydrogen production", INT. JOURNAL OF HYDROGEN ENERGY, vol. 40, 13 November 2014 (2014-11-13), pages 38-50, XP002740645,

## Description

The present invention concerns a highly flexible fuel cell system having a high degree of efficiency and a method for operating a fuel cell system with low energy loss.

Fuel cell systems are widely used in the prior art for generating electric power. It is also known that fuel cells can be operated in a revere mode (reversible mode), a so called electrolysis mode, whereby oxygen and hydrogen are produced by an electrolysis reaction of water. In general, fuel cell systems are susceptible to degradation when the temperature or the pressure in the fuel cell decreases or increases rapidly or when contaminants are settled at the electrodes. However, by use of a fuel cell in a constant mode, degradation of the fuel cell electrodes proceeds and expensive and complicated storage mechanisms for storing the electric power are required.

Starting from this prior art it is an object underlying the present invention to provide a highly effective fuel cell system capable of producing electric power and hydrocarbon fuel which can be operated easily in a constant operating temperature range and which is well prevented from degradation. It is another object underlying the present invention to provide an energy efficient method for operating a fuel cell system in a stable manner making effective use of the media streams and heat present in the fuel cell system.

The object is achieved by a fuel cell system of claim 1. The inventive fuel cell system comprises at least one reversible fuel cell arranged to cyclically or alternately operate in a fuel cell mode to generate electrical energy and reactant product from fuel and an oxidizer or oxidant and is further capable to operate in an electrolysis mode to generate hydrogen and an oxidant from the reactant product. Usually, the reversible fuel cell is operated in the fuel cell mode to satisfy a demand in the national grid. If, however electric power is available excessively from the national grid, the reversible fuel cell is operated in the electrolysis mode.

The reversible fuel cell can be of any kind, e.g. solid oxide fuel cell (SOFC) or molten carbonate fuel cell (MCFC), polymer electrolyte fuel cell (PEM-FC), proton conducting fuel cell, alkaline fuel cell, and the like. In particular, the function of the reversible fuel cell in the fuel cell mode is the generation of electric power by reacting fuel with an oxidant, wherein the oxidant is preferably oxygen. Different types of fuel cells may require the addition of further additive. When using e.g. a MCFC carbon dioxide is additionally supplied to the reversible fuel cell. The oxidant may be pure oxygen or air which may be supplied to an oxidant electrode inlet via an oxidant conduit from an oxidant storage. The oxidant storage may be a tank or may simply be the surrounding of the fuel cell system in case of air being supplied as the oxidant to the oxidant electrode inlet. The fuel is supplied to a fuel electrode inlet of the reversible fuel cell e.g. in form of synthesis gas. In other words, the synthesis gas used according to the present invention can be any fuel gas supporting the fuel cell reaction. The synthesis gas to be used in the fuel cell reaction is stored in a synthesis gas storage and is supplied to the fuel electrode inlet via a synthesis gas conduit, or is produced continuously, e.g. in a biogas plant, gasification plant, drawn from natural gas grid, or the like. The outlet of the reversible fuel cell includes a fuel electrode outlet connected to a reactant product conduit for exhausting and transporting the reactant product of the fuel cell reaction or the electrolysis reaction when the reversible fuel cell is in the fuel cell mode or in the electrolysis mode respectively, and an oxidant electrode outlet connected to an oxidant electrode exhaust conduit, transporting the exhaust gases of the oxidant electrode side of the reversible fuel cell. All conduits used in the inventive fuel cell system may be suitable transport systems like pipelines, hoses or tubing appropriately configured to transport the respective gaseous or liquid streams.

The inventive fuel cell system further comprises a pressure boiler. The pressure boiler is a central system point and includes a reactor for generating hydrocarbon fuel, like e.g. low hydrocarbons, and preferably methane. The process carried out in the reactor can be described as kind of gas conditioning reaction which is a fuel synthesis reaction for synthesizing hydrocarbon fuel. The reactor is not particularly limited and hydrocarbon fuel can be produced in a one-level or multi-level reaction. Exemplary reactor forms are fixed-bed reactors or fluidized bed reactors or any other suitable reactor form which preferably provides a high surface-volume-ratio to enable high heat dissipation. Suitable reactions for obtaining hydrocarbon fuel include but are not limited to methanation, DME-synthesis (dimethylether) and Fischer-Tropsch processes. The pressure boiler is filled with an evaporable fluid, preferably with water, and is integrated in a fluid transport conduit. In case of water used as the evaporable fluid, the pressure boiler is integrated in a water transport conduit. Therefore, heat produced during the generation of hydrocarbon fuel (gas conditioning reaction) can be easily dissipated to the surrounding fluid which then evaporates by boiling and cools the reactor. The operating pressure of the pressure boiler presupposes the temperature of the reactor via the evaporating temperature. The pressure boiler functions as thermal buffer. Thereby an almost isothermal operation can be obtained in the pressure boiler.

At least the synthesis gas conduit, the reactant product conduit, the oxidant conduit and the oxidant electrode exhaust conduit are guided once or several times through the pressure boiler. Moreover, preferably all pipings or tubings of all process streams are guided through the pressure boiler. If a temperature of a process stream is higher than the evaporating temperature, then the process stream is cooled and water vapor is produced from the water in the pressure boiler. The other way around: if the temperature of a process stream is lower than the evaporating temperature, then, the process stream is heated and the water in the pressure boiler is cooled. The pressure boiler, thus, functions as a global heat exchanger which is particularly advantageous at extreme temperature fluctuation. Preferably, the pressure boiler is used at a pressure of about 50 to 150 bar and a temperature of about 270 to 350°C. The respective conduits can be integrated or embedded directly in the pressure boiler or can be connected to the pressure boiler via a heat-transfer-system, like e.g. heat-pipes, resonance pipes or the like.

The inventive fuel cell system further comprises a heat exchanger system for receiving and releasing heat. Said heat exchanger system includes at least one heat exchanger and is connected to those points in the fuel cell system, which require, transport or release heat. Depending on the system configuration one or more heat exchangers can be provided at suitable locations. The heat exchangers can be connected for increasing the efficiency of the heat exchanger system. Preferably influx streams and exhaust streams of high temperature are combined in one multiphase heat exchanger. Thereby temperature differences can be minimized. Preferably, an exhaust stream of a component should be connected to an inlet stream of said component such that heat from the exhaust stream (e.g. oxidant electrode exhaust or fuel electrode reactant product) can be used to heat the respective inlet stream. As an example, the oxidant electrode exhaust usually has a temperature which is about 50 to 100 K higher than the oxidant stream at a very similar mass flow. Accordingly, in a heat exchanger, the oxidant electrode exhaust can heat the oxidant stream. Those heat streams which cannot directly be coupled to a heat sink, like e.g. heat produced in the reversible fuel cell, can be used for compensating unavailable heat at another part of the fuel cell system. The inventive fuel cell system therefore offers multiple possibilities for storing and releasing heat and waste heat obtained in any of the processes of the inventive fuel cell system can be re-used in the heat exchanger system or in the pressure boiler by evaporating the water therein. Accordingly, no thermal energy is wasted but thermal energy can be recycled and used in another process or processes of the fuel cell system.

In the inventive fuel cell system the reversible fuel cell can be operated pressure-less (atmospheric) or pressurized. The pressurized mode is advantageous in light of the yield of the gas conditioning reaction and the power output of the reversible fuel cell. A pressure-less mode of the reversible fuel cell is advantageous in light of ease of operation and may additionally lead to reduction of construction costs, e.g. for tightening and sealing of the reversible fuel cell.

In the inventive fuel cell system electric power can be produced in a highly efficient manner. Extreme temperature fluctuation in the system can be prevented and the reversible fuel cell is kept at an almost constant operating temperature and operating pressure due to the pressure boiler and the heat exchanger system forming part of the fuel cell system. Moreover, the gas conditioning reaction contributes to the static operation of the fuel cell, thus, increasing the lifespan of the reversible fuel cell. It was further observed in scientific literature that during the electrolysis mode, contaminants like e.g. sulfur, carbon, and chlorine, can be removed from the surface of the electrodes which further increases the lifespan of the fuel cell. Since the fuel cell system is kept at an almost constant operating pressure and operating temperature, the fuel cell system can easily react to load cycles of about +100% to -100% without requiring external heat resources and high amounts of external energy. Moreover, valuable hydrocarbon fuel is produced which can be fed to the natural gas grid. Due to the recovery of energy from the fluid streams (via heat exchanger system, pressure boiler, water vapor turbine and the like), the inventive fuel cell system on the one hand has a high degree of efficiency and on the other hand, is highly prevented from degradation. The inventive fuel cell system can be used advantageously for supplementing, compensating or buffering failure of energy supply, particularly originating from fluctuating renewable energies and can additionally produce renewable hydrocarbon fuels. In particular, the inventive fuel cell system preferably consumes synthesis gas (natural gas, biogas, and the like), preferably obtained by renewable energy sources and produces heat (e.g. for use in local heat networks) and hydrocarbon fuels or hydrogen (used e.g. as fuel for vehicles) in desirable amounts according to actual requirements.

The sub-claims contain advantageous embodiments of the present invention.

According to an embodiment the water transport conduit preferably comprises a water vapor turbine which generates electric power by relaxing water vapor passing through the turbine. Electric power which is generated in the turbine can be re-transferred to the reversible fuel cell to support the electrolysis reaction. At least partially expanded water vapor extracted from the water vapor turbine or from the turbine exhaust can be used in other parts of the fuel cell system, e.g. in the electrolysis reaction, and can be transferred to the respective part via a conduit.

According to a further embodiment of the inventive fuel cell system, the fuel cell system comprises a hydrogen storage for storing hydrogen produced by the reversible fuel cell in the electrolysis mode. The hydrogen may preferably be stored at a state-of-the-art storage pressure after condensation of residual water, optional pre-compression in a jet pump device using residual water vapor provided by the water transport conduit, and compression. The stored hydrogen can be used for external applications like, e.g. fuel cell vehicles. Furthermore, hydrogen can be supplied from the storage to the reactor for optimizing the stoichiometry of the gas conditioning reaction. To increase the performance of the fuel cell reaction hydrogen can be supplied from the hydrogen storage to the fuel electrode inlet. Said hydrogen may be mixed with the synthesis gas.

According to another embodiment, the fuel cell system comprises an oxygen storage for storing oxygen produced in the reversible fuel cell when it is operated in the electrolysis mode. The oxygen may be used to burn remaining synthesis gas in the reactant product conduit or may be used in other processes requiring the combustion with oxygen.

Preferred storages are pressurized storages or fluid storages. Pressurized storages are particularly preferred for storing hydrogen and oxygen. For storage, the gas streams are compressed appropriately, wherein a storage pressure of hydrogen is about 700 bar.

In light of an increase of the energetic efficiency of the fuel cell system it is advantageous if the fuel cell system comprises a condenser for condensing unreacted water (electrolysis mode and fuel cell mode). A pump may further be installed for pumping the water.

According to the invention the synthesis gas which is a fuel gas, may be produced by different processes, like e.g. thermochemical or biological processes including gasification of solid and liquid compounds (e.g. coal, biomass, and the like), or the recovery of combustible gases from sewage plants, fermentation processes, mine gas or waste recycling processes. Particular examples of synthesis gas production plants are biogas plants, biomass gasification plants, coal gasification plants of arbitrary design (e.g. fixed bed, fluid bed/fluidized bed, entrained bed, plasma gasification, supercritical water evaporation, and the like). To improve the quality of the synthesis gas, the synthesis gas conduit preferably comprises a gas purifying device and/or a compressor for purifying and/or compressing synthesis gas. A compression of the synthesis gas is preferable to compensate pressure losses in case of gas purification at high temperatures.

In particular, in case synthesis gas is produced via gasification at atmospheric pressure and gas purification at high temperatures is carried out, the synthesis gas enters the synthesis gas conduit with high temperature. During gas purification pressure losses occur. Accordingly, a compressor may be used to compensate these pressure losses. The compressor is preferably installed at the coldest part of the synthesis gas conduit. In case the synthesis gas is produced in a cold process, the synthesis gas is preferably purified at low temperatures.

For humidifying the synthesis gas it is advantageous if the water transport conduit is connected to the synthesis gas conduit. Preferably, water vapor is transferred through the water transport conduit to the synthesis gas conduit which then can heat the synthesis gas to be transferred to the fuel electrode. Thus, an external humidification device can be omitted.

To facilitate a purging of the fuel cell, the fuel cell system advantageously comprises an oxidant electrode circulation conduit for circulating oxidant electrode exhaust through the reversible fuel cell. The recirculation of oxidant electrode exhaust may also be used to control the temperature of the fuel cell. In this case, only a low amount of oxidant needs to be supplied from the oxidant storage to the fuel cell. Alternatively or additionally a fuel electrode circulation conduit for circulating fuel electrode exhaust (reactant product) through the reversible fuel cell can form part of the fuel cell system. The implementation of a fuel electrode circulation conduit improves the flexibility of the fuel cell system since non-combusted fuel electrode exhaust which still contains about 20 vol% synthesis gas with reference to the composition of the synthesis gas supplied to the fuel electrode, water and carbon dioxide and thus, could be fed to the fuel electrode via the synthesis gas conduit in the fuel cell mode. Optionally, hydrogen may additionally be supplied to the fuel electrode.

The energy balance and efficiency of the fuel cell system can be improved by implementing a reaction device in the reactant product conduit. The reaction device can be used as an afterburner which burns synthesis gas remaining in the reactant product at the fuel electrode side of the reversible fuel cell, when the fuel cell is operated in the fuel cell mode. Instead of using one afterburner, a couple of afterburners or in general: combustors, can be used, which may be connected in series. A combustion catalyst may be used to facilitate burning of the synthesis gas. To support the combustion of the remaining synthesis gas in the fuel electrode exhaust oxygen, air or oxidant electrode exhaust can be supplied to the afterburner and water and carbon dioxide are produced. Additionally water vapor can be added to support the reaction or to adjust and control the combustion reaction. Preferably pure oxygen or oxygen gas mixtures not containing nitrogen can be used as an oxidant. The afterburner can preferably be in form of a catalytic burner, pore burner and/or in form of a combined burner-jet pump, jet compressor or steam jet compressor. Depending on the preferred exhaust utilization the reaction device might also be used as a high temperature shift-reactor in the fuel cell mode, e.g. if a fuel synthesis from fuel cell exhaust residual fuel is desired. In the electrolysis mode, the reaction device may also be used as a high temperature shift-reactor. When a high temperature shift-reactor is implemented in the reactant product conduit, carbon dioxide is supplied to the shift-reactor. The carbon dioxide may be supplied through an oxidant conduit, a water vapor conduit or a separate carbon dioxide conduit. Preferably at high temperature of the fuel cell exhaust (e.g. at 800 °C) and particularly using a combustion catalyst, (residual) hydrogen from the reactant product conduit reacts with carbon dioxide to form a mixture including hydrogen, water, methane, carbon monoxide and carbon dioxide. Said mixture can easily react in a fuel synthesis reaction.

In the case where a high temperature shift-reactor is used in the inventive fuel cell system operated in the electrolysis mode comprising a fuel electrode circulation conduit, a share of the electrolysis gas (preferably hydrogen) and water mixture can be removed via the fuel electrode circulation conduit prior to addition of carbon dioxide for the shift reaction. Pure electrolysis gas (preferably hydrogen) can be obtained from the mixture by simply condensing the additionally contained water. The electrolysis gas can be used as fuel for fuel cell cars or the like. The share of gas distribution between the shift-reactor and the fuel electrode circulation conduit varies between 0 to 100% and can be easily controlled via the counter pressure of the components or units of the fuel cell system which are installed in subsequent order.

Preferably, pure oxygen from the oxygen storage is used as an oxidant in the afterburner. This facilitates a separation of the carbon dioxide obtained in the burning reaction (combustion reaction).

In a preferred embodiment, the reactant product conduit comprises a gas turbine or an expander. In the gas turbine (which is usually formed of a compressor, a combustion chamber and an expander) - respectively in the expander, reactant product can be relaxed, whereby electric energy is produced. Said electric energy can be used to support the electrolysis reaction when switching the mode of the fuel cell from fuel cell mode to electrolysis mode. In case an afterburner is provided in the reactant product conduit, the gas turbine or the expander is arranged downstream of the afterburner. In this embodiment, the water and carbon dioxide obtained during the combustion of the fuel electrode exhaust (reactant product) are relaxed in the gas turbine or in the expander, whereby high amounts of electric energy are produced. Such a fuel cell system is highly energy efficient.

Since carbon dioxide and water which are preferably relaxed in a gas turbine or in an expander, are still at a high temperature level, thermal energy can additionally be recovered easily by connecting the gas turbine exhaust to the heat exchanger system. For recovery of water and carbon dioxide separately, it is further advantageous if the reactant product conduit comprises a condenser which in case a gas turbine/expander is also arranged in the reactant product conduit, is located downstream of said gas turbine. In the condenser reactant product including carbon dioxide and water is condensed to obtain liquefied water and gaseous carbon dioxide. Preferably, prior to the condenser a pre-compression is carried out, e.g. in a water jet pump or a steam jet pump. Here, residual vapor from a steam turbine can be used to save compressor performance since non-condensed gas which needs to be compressed for storing, is already present at a higher pressure. Furthermore, the condensation at higher pressure and thus higher temperature allows that waste heat obtained thereby can be fed to a local heat network.

Since carbon dioxide is a valuable gas, the inventive fuel cell system preferably includes a carbon dioxide storage. Preferably, the carbon dioxide storage is integrated in the reactant product conduit and further preferably arranged downstream of the gas turbine and the condenser. In case carbon dioxide is stored, it is further preferable to use pure oxygen as an oxidant in the afterburner to increase the separation efficiency of carbon dioxide and to prevent from contamination of carbon dioxide with nitrogen and other constituents of air.

To increase the purity of carbon dioxide, a carbon dioxide separation device (carbon dioxide purification device) can be integrated in the reactant product conduit. Alternatively, a purification device for separating or purifying other gases can be integrated in the reactant product conduit.

In another embodiment the synthesis gas conduit is connected to a reactor gas passage for extracting pure fuel electrode exhaust before entering the afterburner or shift-reactor for recirculation, extraction from the fuel cell system or supply to the reactor. In particular, at least a part of the synthesis gas can be supplied to the reactor to produce hydrocarbon fuel. By said gas conditioning reaction, which is an exothermic reaction, additional water vapor can be produced which can be used to compensate a deficit in the heat exchanger system when the reversible fuel cell is in the fuel cell mode.

According to a further embodiment, a reactor outlet is connected to the synthesis gas conduit whereby a mixture of hydrocarbon fuel and synthesis gas can be obtained which is highly reactive.

In this case, the reversible fuel cell preferably comprises a reformer for reforming hydrocarbon fuel to obtain hydrogen for the fuel cell reaction.

The fuel cell system further advantageously comprises a steam jet compressor or jet compressor provided in the reactant product conduit.

To improve the autarkic operation of the inventive fuel cell system, the same further comprises a device for generating synthesis gas according to a biological or thermochemical reaction which include gasification of solid and liquid compounds (e.g. coal, biomass, and the like), or the recovery of combustion gases from sewage plants, fermentation processes, mine gas or waste recycling processes. Particular examples of synthesis gas production plants are biogas plants, biomass gasification plants, coal gasification plants of arbitrary design (e.g. fixed bed, fluid bed/fluidized bed, entrained bed, plasma gasification, supercritical water gasification, and the like), and pyrolysis units. In case synthesis gas is produced in-situ, waste heat from the synthesis production process can be discharged in the heat exchanger system. The waste heat can also be used to heat up gases passing through the pressure boiler. Furthermore, heat from the afterburner might be used to support the gasification reaction. In case of a cold process for producing synthesis gas, the same may be heated up by the heat exchanger system prior to use thereof.

At appropriate areas of the inventive fuel cell system additional gas turbines or expanders may be implemented for increasing the electric efficiency of the system. For example, an expander may be installed in the oxidant electrode exhaust conduit near by the outlet of the oxidant electrode which expands hot oxidant electrode exhaust.

The present invention further concerns a method of operating a fuel cell system. The fuel cell system may be constituted as outlined above in regards of the inventive fuel cell system. In other words, the inventive method of operating a fuel cell system can be used to operate the inventive fuel cell system. The fuel cell system comprises at least one reversible fuel cell arranged to cyclically or alternately operate in a fuel cell mode to generate electrical energy and reactant product from fuel and an oxidizer (oxidant) and in an electrolysis mode to generate hydrogen and an oxidant from the reactant product (particularly from water), a pressure boiler, the pressure boiler including a reactor for generating hydrocarbon fuel, a synthesis gas storage connected with an fuel electrode inlet of the reversible fuel cell via a synthesis gas conduit, an fuel electrode outlet of the reversible fuel cell connected to a reactant product conduit, an oxidant storage, connected to the oxidant electrode inlet of the reversible fuel cell via an oxidant conduit and an oxidant electrode outlet connected to an oxidant electrode exhaust conduit. The fuel cell system further comprises a heat exchanger system for storing and releasing heat produced in the processes of the fuel cell system. The synthesis gas conduit, the reactant product conduit, the oxidant conduit and the oxidant electrode exhaust conduit are guided through the pressure boiler, wherein the pressure boiler is integrated in a water transport conduit.

As already outlined above, the reversible fuel cell is capable of being operated in a fuel cell mode and in an electrolysis mode. In the fuel cell mode synthesis gas (which is a fuel gas) is supplied from the synthesis gas storage to the fuel electrode via the synthesis gas conduit, oxidant is supplied from the oxidant storage to the oxidant electrode via the oxidant conduit, and reactant product, water and electricity are produced.

The reversible fuel cell is operated in the fuel cell mode in case of insufficient energy availability from the national grid. The temperature of the synthesis gas may be adapted appropriately and transferred to the fuel electrode side of the reversible fuel cell in the fuel cell mode. The reaction of producing hydrocarbon fuel (gas conditioning reaction) is usually carried out when the reversible fuel cell is operated in the electrolysis mode. However, the gas conditioning reaction may be additionally initiated when the reversible fuel cell is operated in the fuel cell mode. In the fuel cell mode, especially in a part load case, the exothermic gas conditioning reaction can be used to produce additional heat which may be supplied throughout the whole fuel cell system. In both cases, the reactor is kept in a constant temperature range. The gas conditioning reaction may preferably be carried out under isotherm conditions at 270 to 350 °C and a pressure of 50 to 150 bar.

If the national grid has excessive electrical energy, the reversible fuel cell is operated in the electrolysis mode. In the electrolysis mode water is converted into hydrogen and oxidant (oxygen) in the reversible fuel cell. Moreover, in the electrolysis mode synthesis gas is supplied via the synthesis gas conduit to the reactor and reacted in the reactor to produce hydrocarbon fuel. The temperature of the synthesis gas to be transferred to the reactor may be optionally adapted appropriately. In the reactor, the synthesis gas is converted into hydrocarbon fuel, e.g. by a methanation reaction, DME-synthesis, a Fischer-Tropsch process or any other suitable process. Preferably methane is produced in said reaction. Hydrocarbon fuel and preferably methane can be transferred to the natural gas grid or can be used as fuel for vehicles. During the reaction of generating hydrocarbon fuel which is an exothermic reaction, heat is produced which is used to evaporate water in the pressure boiler. Water vapor obtained in the pressure boiler may be supplied to the reversible fuel cell to be electrolyzed in the electrolysis reaction to produce hydrogen and oxygen. Therefore, the inventive method enables a recycling of the mass flows and process streams.

The electrolysis reaction can be carried out endothermic, isotherm or exothermic. In case of an endothermic process and also in the isotherm process, it is possible to use the high temperature waste heat from the synthesis gas and also any other high temperature waste heat for the electrolysis reaction. To achieve this effect, it may be preferable to reverse the gas streams of the reversible fuel cell. This allows a constant temperature profile throughout all cells of the reversible fuel cell. In other words: in the case where in the fuel cell mode the cells heat up the gas streams passing through the cells and in the endothermic electrolysis mode the gas streams are cooled, it is advantageous to reverse the gas streams through the fuel cell (cells) in the electrolysis mode such that the "cold side" of the fuel cell remains at lower temperature and the "hot side" of the fuel cell remains at higher temperature. Thereby thermal stress and thus, material fatigue can be prevented.

In particular, quick changes between fuel cell mode and electrolysis mode can be carried out and the fuel cell system is capable of reaction on high load changes quickly. In case of an exothermic process it is advantageous to provide expanders at the oxidant electrode side and/or the fuel electrode side. In the exothermic process the electrolysis product gas has increased temperature which is advantageously used in combination with gas turbines or expanders. The obtained electrolysis product gas is transferred through the expander and relaxed therein, whereby electric energy is produced which may be used to support the electrolysis reaction. Therefore, most of the waste heat can be recovered. Even in this case the temperature profile of the reversible fuel cell can be kept constant which allows easy switching between fuel cell mode and electrolysis mode without the requirement of adapting the temperature of the cells. If e.g. oxygen is transferred through the cells in reverse direction by underpressure, the oxygen transports heat to the previous cells which may also allow a combination of an endothermic and exothermic process.

According to the inventive method waste heat from the production reaction of hydrocarbon fuel in the reactor is used to evaporate water in the pressure boiler and waste heat from the reactant product and the oxidant electrode exhaust is transferred to the heat exchanger system. Since thus, waste heat is not discharged but kept in the system, to be supplied to areas where heat is needed, the method of operating the fuel cell system has high thermal efficiency and energy efficiency. Since the temperature of the reversible fuel cell and also of the reactor is maintained at a constant temperature level, the inventive method prevents the fuel cell system from deterioration or degradation. Moreover, the method allows high load changes without requiring external heat to operate the system. By switching between the fuel cell mode and the electrolysis mode contamination of the electrodes of the reversible fuel cell can be reduced. Therefore, by applying the inventive method the degradation of the fuel cell system can be further reduced.

Regarding additional explanations to the components of the fuel cell system, advantages and advantageous effects, reference is made to the disclosure of the above captioned inventive fuel cell system.

Advantageously, the water transport conduit comprises a water vapor turbine. Water vapor obtained in the pressure boiler may be relaxed in the water vapor turbine. Thereby electric energy is produced which can be transferred to the electric grid or used to support the electrolysis reaction, thus, increasing the energetic efficiency of the inventive method. Preferably as the water vapor for use in the electrolysis reaction, expanded water from the pressure boiler (as steam turbine exhaust) is used. Evaporated water is at least partially relaxed in the water vapor turbine and can subsequently condensed and/or further used after expansion to be supplied to the synthesis gas conduit or the afterburner.

According to an advantageous embodiment of the inventive method, hydrogen produced in the reversible fuel cell during the electrolysis mode or stored in a hydrogen storage is supplied to the reactor to support the generation of hydrocarbon fuel, whereby the yield of hydrocarbon can be increased.

In the electrolysis mode it is further advantageous to store oxygen produced in the reversible fuel cell in an oxygen storage and to transfer waste heat from the oxygen to the heat exchanger system. Thereby, the energy balance of the whole system can be improved.

In light of further improving the energy balance of the fuel cell system it is advantageous to condense and compress in the electrolysis mode, unreacted water from the electrolysis reaction. Waste heat obtained by the condensation and compression is transferred to the heat exchanger system.

For the same reason, the oxidant electrode streams and/or fuel electrode streams may further be cooled by the heat exchanger system. Water may be condensed and hydrogen and oxygen may be compressed for storing.

In the electrolysis mode the reversible fuel cell can be advantageously used to produce methane which can be transferred to the natural gas grid. Accordingly, carbon dioxide and steam are supplied to the reversible fuel cell and methane or a gas mixture including hydrogen, carbon monoxide, water and carbon dioxide is generated in the fuel electrode of the reversible fuel cell. Said gas mixture can be reacted in a subsequent process to form hydrocarbon fuels.

To prevent the fuel cell system from degradation due to oxidation it may be preferable to purge the oxidant electrode with water vapor (steam), carbon dioxide or air to cast out oxygen in the electrolysis mode.

To further improve the energy balance of the fuel cell system, in the electrolysis mode or in the fuel cell mode, gas streams from the oxidant electrode and/or the fuel electrode can be relaxed in a gas turbine or an expander. In particular, in the fuel cell mode the reactant product may be supplied to a gas turbine or alternatively to an expander, relaxed and then cooled by the heat exchanger system. Thereby electric energy can be generated at the gas turbine site (or at the expander) and waste heat can be recovered which even more improves the thermal energy balance of the system.

An improvement of the mass flow balance of the reversible fuel cell can be obtained and a contamination of the electrodes of the fuel cell can be reduced when, according to an advantageous embodiment, in the fuel cell mode, the synthesis gas to be supplied to the fuel electrode is purified in a gas purifying device and/or compressed in a compressor. Any suitable purifying method can be used, whereby typical contaminants like e.g. particles, coal tar, alkali, chorine compounds and sulfur compounds as well as siloxanes can be eliminated. Preferably the gas purification process is selected in light of the method of producing the synthesis gas (the fuel gas), i.e. a hot process (e.g. hydrocarbon reforming, gasification) or a cold process (e.g. biogas process).

As an example, suitable gas purification processes to be used for synthesis gas generated in a gasification process may include a cyclone for coke and bed material recirculation into the gasifier. The gas purification may be carried out in different units which are connected to each other in series. Olivine, dolomite and/or nickel catalysts can be used for endothermic (steam-) reforming of higher hydrocarbons. Olivine and dolomite additionally bind other contaminants like e.g. sulfur compounds, halogens, and the like. Due to the endothermic nature of the reaction, a decrease of the temperature occurs, and chemical energy is bound in the synthesis gas. Usually, in purifying processes, the temperature after a dolomite process is decreased to about 300 to 350 °C to improve the precipitation of sulfur compounds. If necessary, the synthesis gas can be cooled by the heat exchanger system prior to passing the purifying device. Filters for separating particles, precipitation beds for precipitating halogens e.g. Nahcolit (NaHCO₃), Na₂CO₃ or Na_{2O}/Al₂O₃ and ZnO/CuO polishers may form part of the purifying device.

Particularly advantageous is the use of hot purification of synthesis gas (temperature of at least 300 °C) since in this case, the synthesis gas to be transferred and reacted in the reactor does not require additional heating steps. The complete waste heat obtained in the gas conditioning reaction can then be used for producing water vapor for the water vapor turbine and the electrolysis reaction, whereby the degree of efficiency of the system is increased.

In case hot synthesis gas, e.g. from a gasification process, should be purified in a cold process due to higher efficiency of the cleaning/purification action, the synthesis gas can preferably be cooled by the heat exchanger system, then passed through the pressure boiler and is again transferred through the heat exchanger system to be further cooled, subsequently purified and again passed through the heat exchanger system and the pressure boiler to be re-heated.

When compressing the synthesis gas, waste heat is used to vaporize water in the pressure boiler or may alternatively be transferred to the heat exchanger system. Suitable additives may be introduced into the gasification reaction like e.g. steam, carbon dioxide, oxygen and the like which are obtained and stored by operating the inventive fuel cell system, and heat produced in the afterburner/shift-reactor device might also be extracted, e.g. by means of heat-pipes, if appropriate.

The synthesis gas may be heated in the synthesis gas conduit prior to entering the fuel electrode inlet.

Further advantageous, in the fuel cell mode, the synthesis gas to be supplied to the fuel electrode is enriched with water vapor from the water transport conduit. The water vapor may be originated from the pressure boiler, or preferably from extraction steam or exhaust of the water vapor turbine depending on the required pressure level. Alternatively, water in the water transport conduit may pass a heat exchanger and subsequently, heated water or water vapor is supplied to the synthesis gas conduit.

In light of the ease of operation of the fuel cell system it is advantageous if, in the fuel cell mode, the reversible fuel cell is operated under atmospheric pressure, oxidant is used to cool the reversible fuel cell, and a suitable amount of oxidant electrode exhaust, preferably at least 30%, more preferably about 50% of oxidant electrode exhaust is circulated through the reversible fuel cell.

As an example, when the reversible fuel cell is reacted under atmospheric pressure, at a typical temperature of about 800 to 900 °C it is difficult to use the waste heat produced by the fuel cell reaction in an expander since then, expansion leads to underpressure at the outlet of the expander. Therefore, it may be advantageous to compress oxidant (air) to be supplied to the oxidant electrode inlet via the oxidant conduit to a pressure of about 3 to 20 bar. The oxidant is then heated by the heat exchanger system to a temperature of about 850 °C and may further be relaxed in a gas turbine or in an expander to the fuel cell inlet pressure prior to supplying the oxidant to the fuel cell. Thus, the fuel cell can be operated at atmospheric pressure while waste heat is used effectively.

To increase the energy efficiency and to prevent the system from wasting valuable compounds, in the fuel cell mode, the reactant product may be burned in an afterburner to produce water and carbon dioxide, wherein waste heat from the after burner is transferred to the heat exchanger system and/or the water transport conduit and/or is used to heat feed water supplied to the water transport conduit. As an oxidant for the combustion reaction oxygen obtained in the electrolysis reaction and/or oxidant electrode exhaust gas is preferably used. Alternatively, a high temperature shift-reactor may be used. When a high temperature shift-reactor is used, carbon dioxide is supplied to the shift-reactor. The carbon dioxide may be supplied through an oxidant conduit, a water vapor conduit or a separate carbon dioxide conduit. Preferably at high temperature of the fuel cell exhaust (e.g. at 800 °C) and particularly using a combustion catalyst, residual hydrogen from the reactant product conduit reacts with carbon dioxide to form a mixture including hydrogen, water, methane, carbon monoxide and carbon dioxide. Said mixture can easily react with a fuel synthesis reaction.

It is further preferred to operate a gas turbine and/or the water vapor turbine by a direct current converter or a direct current generator. Such course of action facilitates the controlling of the fuel cell system. Thereby a speed governor or other speed control means for controlling the gas turbine can be omitted. Furthermore, the performance of the gas turbine can then be used in the start-up process or the shut-down process of the fuel cell system. Moreover, the electric power of the gas turbine can be directly used to support the electrolysis reaction.

To improve the thermal energy balance in the fuel cell mode water in the reactant product is condensed in a condenser and carbon dioxide in the reactant product is compressed and cooled until the carbon dioxide is liquefied and is then stored in a carbon dioxide storage. The condensation reaction facilitates the separation of carbon dioxide. Preferably, the reactant product is cooled by the heat exchanger system prior to the condensation process. Conventional water jet pumps or vapor jet pumps driven by water vapor from the water vapor turbine can be used to pre-compress the reactant product. Thereby the condensation temperature is increased and waste heat from the condensation reaction can be used easily. Due to condensing the water, the carbon dioxide gets separated. Also the obtained carbon dioxide can be compressed, e.g. in a water jet compressor, vapor jet compressor or other compressors. A membrane can be used to further separate carbon dioxide from residual water. As a purge gas compressed carbon dioxide may be used at the membrane outer face which is first relaxed to the condenser pressure, picks up water at the membrane outer surface and is then transferred back to the condenser.

According to a further advantageous embodiment, the carbon dioxide (including pressurized carbon dioxide obtained as outlined above) may further be compressed and cooled until the carbon dioxide condenses and liquid carbon dioxide is obtained which can be further compressed and stored easily. Gaseous contaminants like nitrogen, hydrogen and carbon monoxide can be separated easily and may be recirculated to the system if appropriate.

Separated carbon dioxide can be stored and/or used as feed gas for the gas conditioning reaction. In this case, hydrogen may be supplied additionally.

When oxygen is supplied from a high pressure oxygen storage, the expansion cold can be used for condensing carbon dioxide. Thereby the required pressure level for the condensation reaction reduces and the compressor capacity can be reduced and efficiency of the performance of the fuel cell system can be increased.

At the same time, the oxygen expansion can be carried out by reversibly operating the oxygen compressor, thus, generating electric energy to further increase the performance of the fuel cell system.

By combining the above captioned expansion/compression processes with a jet pump device for compressing and condensing reactant product by use of excessive water vapor the compressor capacity can be reduced. Most effectively the required compressor capacity can be used for compressing oxygen in case of excessive production of electric energy.

The above captioned condensation reaction of carbon dioxide by use of expansion cold can preferably be carried out in a specific compressor-expander-unit. In the compression process water is evaporated for cooling of the condenser and transferred to the water vapor used in the electrolysis reaction. In the expansion process the carbon dioxide is condensed by use of the expansion cold and is then stored in a carbon dioxide storage. The cooling performance can be increased by extracting power from the system, whereby the temperature of the expanded oxygen reduces. A first compressor stage can be used variably for compressing oxygen or carbon dioxide. The starting pressure is chosen such that it is equivalent to the pressure required for liquefying carbon dioxide when taking into account the expansion cold. A further compressor stage is used to compress oxygen for storage in the electrolysis mode or for expansion in the fuel cell mode. This can be accomplished preferably such that at the heat exchanger surfaces, in the electrolysis mode, as outlined above, water vapor is produced from the compression waste heat and in the fuel cell mode, condensed carbon dioxide is used to heat the expanding oxygen. Thereby a more isothermal expansion at the condensation temperature of carbon dioxide is obtained which additionally increases the performance of the fuel cell system.

Alternatively, the oxygen can be compressed in a conventional compressor and cooled subsequently. The expansion of oxygen can easily be carried out using a throttle valve which can be tempered by condensing carbon dioxide.

According to another preferable embodiment, oxygen and carbon dioxide can be stored together in a mixing tank at about 200 to 300 bar, whereby both compounds are present in separate phases, and can thus again be extracted separately. Combined storage is advantageous in light of safety aspects.

The stored oxygen can preferably be used for supporting the burning reaction in the afterburner, or for regenerating the gas purifying device or can even be sold.

To improve the balance of the mass flows, oxidant used to burn reactant product in the after burner can be oxygen obtained in the electrolysis mode (stored in an oxygen storage) and/or can be oxidant electrode exhaust gas.

In another embodiment, in the fuel cell mode, especially at part load, at least a part of the synthesis gas is purified in a gas purifying device and supplied to the reactor to produce hydrocarbon fuel and heat produced during the generation of hydrocarbon fuel is used to boil or evaporate water in the pressure boiler and a share of 0 to 100% of the hydrocarbon fuel is mixed with the synthesis gas to be supplied to the fuel electrode. Thereby additional water vapor is produced which is advantageous in light of the energy balance of the fuel cell system.

Further preferable, in the fuel cell mode, the reversible fuel cell is reforming hydrocarbon fuel supplied to the fuel electrode whereby the energy output of the fuel cell can be increased.

To increase an autarkic operation, the synthesis gas is produced by biological or thermochemical reaction and waste heat is transferred to the heat exchanger system and/or is used to evaporate water in the pressure boiler.

Due to electric energy saving reasons the electric power obtained in a gas turbine or in the water vapor turbine supports the electrolysis reaction.

Preferably, waste heat is used in an organic rankine cycle and/or a Misselhorn process and/or a Kalina process.

In case of excessive water vapor, the water vapor can be used atmospherically or at a pressure of up to about 5 bar in a vapor jet compressor for compressing the exhaust gases of the reversible fuel cell. Instead of conventional processes, electrochemical processes may be used. For example, compression of gases may be achieved by use of electrochemical processes comparable to the electrolysis reaction. Thereby e.g. a PEMFC can be used for compression of hydrogen. If a voltage is applied to the PEMFC H⁺ ions are transported.

Each compound used in the inventive method can be heated by an electric heater, if necessary. An electric heater can also be used to buffer temperature changes in the reversible fuel cell during load changes.

Preferably the site selection is chosen such that synthesis gas is directly available. The inventive fuel cell system can further be used as a hydrogen gas station due to production and storage of hydrogen in the electrolysis mode of the reversible fuel cell.

Further preferable, in the fuel cell mode, the oxygen reduced oxidant electrode exhaust may be used for the endothermic regeneration of zeolite storages. Zeolite storages can be used for example for heating or cooling of electro mobiles, to support local heat systems and domestic heating systems. An optimum regeneration temperature of zeolites ranges between 180 and 200 °C. Oxidant electrode exhaust can thus be transmitted to the zeolite, if applicable, after pre-cooling of the oxidant electrode exhaust and discharging heat in the pressure boiler. Thereby, heat is transferred to the zeolite and water is desorbed from the zeolite by the oxidant electrode exhaust.

Further preferable the low-temperate waste heat can be used for regeneration of other thermochemical storages, phase-change storages, adsorption storages or other comparable storage systems.

Excessive low-temperature waste heat can be provided from condensers of the reactant product conduit.

For transferring waste heat to the local heat system, the inventive fuel cell system may further comprise heat pumps. By use of the heat pumps the waste heat can be tempered at about 80 to 100 °C.

The inventive fuel cell system may additionally include stationary or mobile thermal or thermochemical storages, e.g. to meet the requirements of a local heat system.

A solar plant may be integrated in the fuel cell system for providing additional electricity for the electrolysis reaction.

Carbon dioxide produced in the inventive fuel cell system may be used for cultivation of algae. The algae then can be used to produce synthesis gas. Thereby, the synthesis gas cycle might be partially closed. Remaining carbon dioxide can be recirculated.

Preferably, a biogas plant and/or a gasification device are integrated in the inventive fuel cell system. The biogas plant and gasification may additionally be coupled with a gas purification device and/or a steam reformer.

In case more thermal energy is needed than presently available in the fuel cell system additional fuel and/or oxygen may be burned in the afterburner.

Precipitated carbon dioxide may be used in the electrolysis mode of the reversible fuel cell for reaction with hydrogen to produce fuel, preferably methane. However, it is preferable to react carbon dioxide with stored hydrogen when the reversible fuel cell is operated in the fuel cell mode. The obtained waste heat can be used for generation of electric energy. In this case, further energy can be saved since the carbon dioxide compression and condensation can be omitted.

Alternatively or additive to the reversible fuel cell a combination of a thermally and/or fluidly coupled high temperature fuel cell and a high-temperature electrolysis cell system can be used.

Further details, advantages and characteristics of the present invention will be explained with respect to the following description of the embodiments in light of the Figures. The Figures show:
- Fig. 1: a schematic diagram of a fuel cell system according to a first embodiment,
- Fig. 2: another schematic diagram of a fuel cell system according to the first embodiment,
- Fig. 3: a schematic view of an interconnection in the heat exchanger system of the fuel cell system of Figures 1 and 2,
- Fig. 4: a schematic diagram of a fuel cell system according to a second embodiment,
- Fig. 5: a schematic diagram of a fuel cell system according to a third embodiment,
- Fig. 6: another schematic diagram of the fuel cell system according to the third embodiment,
- Fig. 7: a schematic diagram of a fuel cell system according to a fourth embodiment,
- Fig. 8: a schematic diagram of a fuel cell system according to a fifth embodiment,
- Fig. 9: a schematic diagram of a fuel cell system according to a sixth embodiment,
- Fig. 10: another schematic diagram of the fuel cell system according to the sixth embodiment,
- Fig. 11: a schematic diagram of a fuel cell system according to a seventh embodiment,
- Fig. 12: another schematic diagram of the fuel cell system according to the seventh embodiment,
- Fig. 13: a schematic diagram concerning carbon dioxide separation according to a first embodiment,
- Fig. 14: a schematic diagram concerning carbon dioxide separation according to a second embodiment,
- Fig. 15: a schematic diagram concerning carbon dioxide separation according to a third embodiment,
- Fig. 16: a schematic diagram concerning carbon dioxide separation according to a fourth embodiment,
- Fig. 17: a schematic diagram concerning carbon dioxide separation according to a fifth embodiment,
- Fig. 18: a schematic diagram concerning carbon dioxide separation according to a sixth embodiment,
- Fig. 19: a schematic diagram concerning carbon dioxide separation according to a seventh embodiment,
- Fig. 20: a schematic diagram concerning carbon dioxide separation according to an eighth embodiment,
- Fig. 21: a schematic diagram of treatment of oxygen and
- Fig. 22: a schematic diagram showing mixed expansion/compression of oxygen/carbon dioxide.

The present invention is described with reference to the following Figures. Herein all essential elements and components of the inventive fuel cell system are shown. All other elements and components have been omitted to increase the understanding of the present invention. In the Figures same reference numbers denominate same elements/components. Dotted lines symbolize presently inactivated elements/components or conduits of the fuel cell system. These elements/components or conduits are not used in the respective illustration. However, these elements/components or conduits can be activated if necessary.

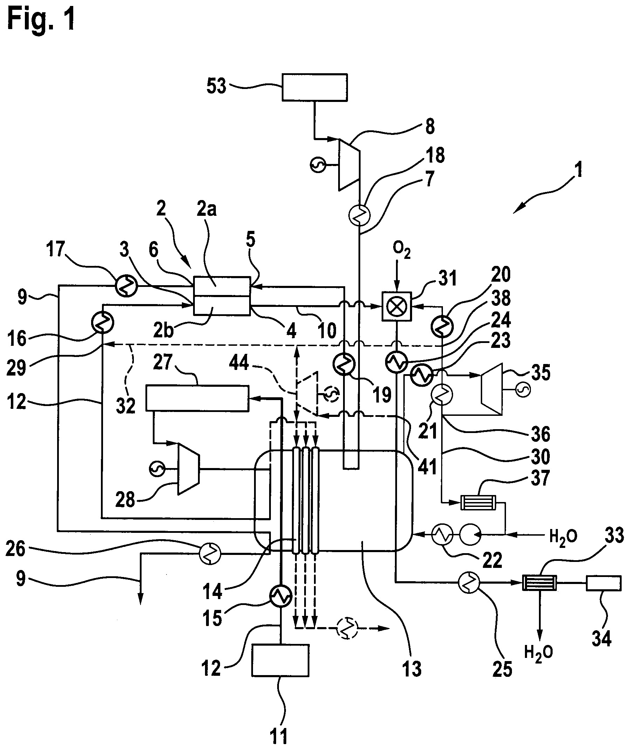

In detail, Figure 1 shows a schematic diagram of a fuel cell system 1 according to a first embodiment of the present invention. The fuel cell system 1 comprises a reversible fuel cell 2 including a oxidant electrode 2a and an fuel electrode 2b. The reversible fuel cell 2 is arranged to cyclically or alternately operate in a fuel cell mode to generate electrical energy and reactant product from fuel and an oxidant and in an electrolysis mode to generate hydrogen and an oxidant from the reactant product. The reversible fuel cell 2 may include a plurality of cells, each including a oxidant electrode and an fuel electrode, wherein the cells are connected in series, called a stack, and furthermore a series or parallel connection of several stacks. The reversible fuel cell 2 of Figure 1 is operated in the fuel cell mode.

Oxidant electrode 2a of the fuel cell 2 comprises an oxidant electrode inlet 5 through which oxidant, e.g. oxygen or simply air, is introduced. Oxidant is transferred to the oxidant electrode inlet 5 via an oxidant conduit 7 from an oxidant storage 53. The oxidant storage 53 may be a tank or may even be the atmosphere surrounding of the fuel cell system 1. In the oxidant conduit 7 a compressor 8 is provided to compress the oxidant to an appropriate operating pressure. The oxidant electrode 2a further comprises an oxidant electrode outlet 6 through which oxidant electrode exhaust exits the fuel cell 2 via oxidant electrode exhaust conduit 9.

Fuel electrode 2b of the fuel cell 2 comprises a fuel electrode inlet 3 through which synthesis gas enters the fuel cell 2 at the fuel electrode side. The synthesis gas (fuel gas) is provided from a synthesis gas storage 11. The synthesis gas storage 11 may be a tank or may simply be a conduit which directly connects a synthesis gas plant to synthesis gas conduit 12. The synthesis gas is supplied to fuel electrode 2b via synthesis gas conduit 12. By the fuel cell reaction reactant product is produced from the reaction of synthesis gas with oxidant, the reactant product including water (water vapor) and may further contain carbon dioxide and residual fuel. The reactant product exits fuel electrode 2b at fuel electrode outlet 4 which is connected to reactant product conduit 10.

The fuel cell system 1 further comprises a pressure boiler 13. The pressure boiler 13 is filled with fluid, preferably with water, kept under a certain pressure. The pressure boiler 13 further includes a reactor 14 for generating hydrocarbon fuel by any suitable reaction type (gas conditioning reaction), whereby preferably methane is generated.

The fuel cell system 1 further comprises a heat exchanger system for receiving and releasing heat. The heat exchanger system includes a plurality of heat exchangers 15, 16, 17, 18, 19, 20, 21, 22, 23, 24, 25, and 26 which are provided at appropriate locations throughout the whole fuel cell system 1 to receive waste heat from relatively warm process streams or compounds and to transfer heat to relatively cold process streams or compounds. Among heat exchangers 15 to 26 one can differentiate high-temperature heat exchangers 15, 16, 17, 19, 20, 23 and 24 and low-temperature heat exchangers 18, 21, 22, 25 and 26. High-temperature heat exchangers have an operating temperature above the evaporating temperature of pressure boiler 13, e.g. 300 °C and higher, whereas low-temperature heat exchangers have an operating temperature below the evaporating temperature of pressure boiler 13, e.g. below 300 °C. The heat exchangers 15 to 26 may be connected to each other and coupled such that heat transfer through the whole fuel cell system 1 can be easily arranged without thermal losses.

Furthermore, a water transport conduit 30 forms part of the fuel cell system 1 which in the present embodiment is in form of a water circulation conduit. The pressure boiler 13 is integrated into water transport conduit 30 so that water vapor produced in the pressure boiler 13 can be supplied to different areas in the fuel cell system 1. At respective branch points water or water vapor can be extracted from the water transport conduit 30.

Other components and elements of the fuel cell system 1 will be explained in light of the following explanation of the operation of the fuel cell system 1.

In case the national grid has a deficit of electric energy due to low generation capacity of external electricity generating facilities (e.g. wind power system or solar plant), the fuel cell system 1 is operated in the fuel cell mode, i.e. synthesis gas is supplied from the synthesis gas storage 11 via synthesis gas conduit 12 to the fuel electrode 2b of fuel cell 2. Since the synthesis gas in the present embodiment is hot gas (e.g. obtained from gasification of coal or biomass or the like), the synthesis gas passes through heat exchanger 15, whereby the synthesis gas cools down. Further waste heat is transferred to pressure boiler 13. The synthesis gas then enters gas purifying device 27. Here, synthesis gas is purified from contaminants like e.g. particles, chlorine and sulfur compounds and the like. The synthesis gas is then compressed in compressor 28, whereby waste heat is transferred to pressure boiler 13. The temperature of the synthesis gas is then appropriately adapted by passing through heat exchanger 16 and subsequently the synthesis gas enters fuel electrode 2b via fuel electrode inlet 3. Prior to re-heating of the synthesis gas by passing heat exchanger 16, the synthesis gas can be enriched with water vapor from the water transport conduit 30 at branch point 29.

At the same time, oxidant is supplied from oxidant storage 53 via oxidant conduit 7. The oxidant is first compressed in compressor 8, passes through the heat exchanger 18, pressure boiler 13 and heat exchanger 19 and enters the oxidant electrode 2a at oxidant electrode inlet 5.

In the reversible fuel cell 2 oxidant and synthesis gas are reacted to produce water vapor and electricity (electric energy). The utilization rate of the synthesis gas is about 80%. In case the synthesis gas is a hydrocarbon gas, fuel cell 2 may include a reformer for reforming the hydrocarbon gas to produce hydrogen to be used in the fuel cell reaction subsequently.

Subsequently, reactant product including carbon dioxide, water and remaining synthesis gas exits the fuel electrode outlet 4 and is supplied via reactant product conduit 10 to an afterburner 31. Air, oxidant or preferably oxygen can be supplied to afterburner 31 to support the combustion reaction therein. Additionally, water or water vapor may be supplied to the afterburner 31 from water transport conduit 30. Thereby the temperature of the combustion reaction can be controlled. In the afterburner 31 the remaining synthesis gas is burned to produce further carbon dioxide and water. Exhaust gas (burned reactant gas) exits the afterburner 31 and is further transported via reactant product conduit 10.

In the reactant product conduit 10, the burned reactant product passes through heat exchanger 24, where it cools down. Additional waste heat from the burned reactant product may be supplied to pressure boiler 13. The burned or combusted reactant product further passes through heat exchanger 25, where waste heat could be recovered and used e.g. for heating up synthesis gas (fuel gas) or oxidant or feed water for pressure boiler 13 or afterburner 31.

The reactant product conduit 10 further comprises a condenser 33, where water remained in the burned reactant product condenses and liquefied water is discharged from fuel cell system 1 or stored or recycled appropriately. Remaining gaseous carbon dioxide is a valuable gas and can be stored in carbon dioxide storage 34.

After passing condenser 33 a separation of the reactant product may be carried out to separate remaining fuel or synthesis gas from carbon dioxide and water. In this case an afterburner 31 can be omitted. Alternatively, in the fuel cell mode reactant product can be supplied completely from reactant product conduit 10 via branch point 41 to compressor 42 and further to reactor 14. The reactant product can then be used in the gas conditioning reaction carried out in reactor 14, e.g. in a Fischer-Tropsch process or methanation reaction Generated hydrocarbon fuel can be separated and optionally supplied to synthesis gas conduit 12.

In a further embodiment, synthesis gas can be separated from other components in synthesis gas conduit 12, e.g. by using a membrane. This is preferably advantageous in case of use of biogas (including methane and carbon dioxide) as synthesis gas. Separated carbon dioxide may then be stored in carbon dioxide storage 34 or may be mixed with hydrogen and supplied to reactor 14. Methane can be supplied to fuel cell 2 for generation of electric energy when the fuel cell system 1 is in the fuel cell mode or in the electrolysis mode can be supplied directly to the natural grid without passing reactor 14.

At the oxidant electrode side of fuel cell 2 oxidant electrode exhaust is discharged at oxidant electrode outlet 6 and is passed through oxidant electrode exhaust conduit 9. Oxidant electrode exhaust conduit 9 includes heat exchangers 17 and 26, where oxidant electrode exhaust is cooled. The cathode exhaust conduit 9 further passes through pressure boiler 13 between passing heat exchanger 17 and 26.

Pressure boiler 13 is the central system point of fuel cell system 1. Making use of reactor 14 - which is usually operated during the electrolysis mode, but can additionally be used in the fuel cell mode of the system to produce additional water vapor, hydrocarbon fuel, like e.g. low hydrocarbons, and preferably methane, are generated. The process carried out in reactor 14 is not particularly limited and may include methanation, DME-synthesis or Fischer-Tropsch processes. Pressure boiler 13 is filled with water and is integrated in water transport conduit 30. Therefore, heat produced during the generation of hydrocarbon fuel (gas conditioning reaction) can be easily dissipated to the surrounding water which then evaporates and cools the reactor. Evaporated water can be used throughout the whole fuel cell system to heat up gas streams or to humidify gas streams. Pressure boiler 13 functions as thermal buffer. Thereby an almost isotherm operation can be obtained in pressure boiler 13.

In particular, water is fed to water transport conduit 30, passes through heat exchanger 22 and enters pressure boiler 13.

At least synthesis gas conduit 12, reactant product conduit 10, oxidant conduit 7 and oxidant electrode exhaust conduit 9 are guided through pressure boiler 13, whereby waste heat from the gas streams in conduits 7, 9, 10 and 12 is transferred to pressure boiler 13 to heat up water present in pressure boiler 13.

Water transport conduit 30 further comprises water vapor turbine 35 where water vapor passing through water vapor turbine 35 is relaxed and electric energy is produced. Said electric energy can be used to support the electrolysis reaction explained below. At branch point 36, water vapor can be transferred to afterburner 31 or to condenser 37 for recycling of water to then be fed again to pressure boiler 13. At branch point 38 water can be supplied to water passage 32 arranged to humidify synthesis gas in synthesis gas conduit 12 or can be supplied to afterburner 31.

By passing all relevant conduits 7, 9, 10 and 12 through pressure boiler 13 and transferring waste heat obtained in the processes of fuel cell system 1 to the heat exchanger system and transferring heat from the heat exchanger system to cold process streams, energy from the process streams can be recovered and thermal losses are reduced to a minimum. Therefore, inventive fuel cell system 1 has a high degree of efficiency and can be used advantageously for supplementing, compensating or buffering failure of energy supply, particularly originating from fluctuating renewable energies and can additionally produce renewable hydrocarbon fuels and hydrogen.

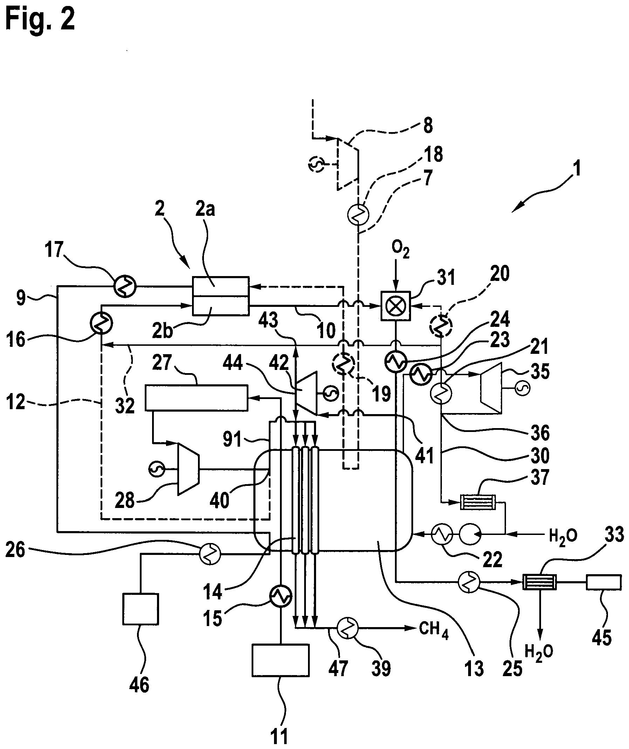

Figure 2 is a schematic diagram of fuel cell system 1, wherein, however, contrary to Figure 1, the fuel cell system 1 is operated in an electrolysis mode. The electrolysis mode is used in times where excessive electric energy is available in the national grid. In the electrolysis mode, water is electrolyzed using electric energy and hydrogen and oxygen are produced. The heat exchanger system is identical to the one shown in Figure 1. By switching between the fuel cell mode and the electrolysis mode additionally contamination of the reversible fuel cell 2 can be reduced.

According to Figure 2, synthesis gas is supplied from synthesis gas storage 11 via synthesis gas conduit 12 and passes through gas purifying device 27 and compressor 28. However, at branch point 40 synthesis gas is redirected to reactor 14 integrated in pressure boiler 13. In reactor 14, synthesis gas is reacted to produce hydrocarbon fuel in a gas conditioning reaction. Heat produced in the exothermic gas conditioning reaction is used to heat up water in pressure boiler 13. For example, waste heat from a methanation reaction evaporates water at a pressure of about 100 bar and a temperature of about 300 °C. Exhaust gas from reactor 14 including hydrocarbon fuel exits reactor 14 and is supplied via reactor conduit 47, passed through heat exchanger 39 and supplied for example to the natural gas grid.

Fuel cell 2 is used as electrolysis cell and water vapor is supplied from pressure boiler 13 via water transport conduit 30 and passage 32 to fuel electrode 2b. In particular, water vapor leaves pressure boiler 13, passes through heat exchanger 23 and water vapor turbine 35, where by relaxation of water vapor electric energy is produced which is supplied to fuel cell 2 to support the electrolysis reaction. Water vapor further enters passage 32 and passes through heat exchanger 16 prior to entering the fuel electrode 2b at fuel electrode inlet 3. The pressure of the water vapor can be adjusted appropriately, exemplarily to 1 bar, by water vapor turbine 35.

A part of water vapor remained in the reactant product (now including hydrogen) at the fuel electrode side can be recirculated to fuel electrode 2b and therefore is supplied via reactant product conduit 10 and redirected at branch point 41 to compressor 42, compressed and subsequently fed to passage 32 at branch point 43 to prevent damages in fuel cell 2. In addition a part of hydrogen produced by the electrolysis reaction can be supplied to reactor 14 to support the gas conditioning reaction and to adjust the stoichiometry of the reaction appropriately. Thereby, most of carbon dioxide and carbon monoxide present in the synthesis gas is converted to hydrocarbon fuel. Remaining hydrogen in the reactant product stream is supplied via reactant product conduit 10, passes through heat exchanger 24, then passes through pressure boiler 13 and subsequently through heat exchanger 25, reaches condenser 33, where water present in the reactant product is condensed and pure hydrogen is stored in hydrogen storage 45.

Oxygen obtained as oxidant electrode exhaust in the electrolysis reaction exits oxidant electrode 2a and is supplied through oxidant electrode exhaust conduit 9. Oxidant electrode exhaust conduit 9 is guided through heat exchanger 17 and pressure boiler 13 which receives heat from the hot oxidant electrode exhaust. Subsequently, oxidant electrode exhaust is passing through heat exchanger 26 and is stored in oxygen storage 46.

Via oxidant conduit 7 purge gas like e.g. carbon dioxide or steam, can be supplied to the oxidant electrode to purge contaminants and remaining oxygen. Stored oxygen can be used to support the combustion reaction in afterburner 31 in the fuel cell mode of fuel cell system 1 or can be used during generation of synthesis gas, e.g. in a gasification reaction of coal or biomass.

Considering all process streams in Figures 1 and 2, neither reactant gas or fluid nor product gas or fluid is wasted. The fuel cell system 1 can operate almost autarkic, wherein valuable reaction products are recovered and stored or used in further processes. The fuel cell system can easily and quickly react on load changes, wherein, however, the temperature level of fuel cell system 1 is maintained almost constant, whereby degradation of the fuel cell 2 can be reduced. Moreover, due to operating fuel cell system 1 in the electrolysis mode, contamination of the electrodes can be reduced which increases the lifespan of fuel cell system 1.

In general, any suitable kind of fuel cell can be used. When using a MCFC additionally carbon dioxide is supplied to the fuel cell. Moreover, when adding carbon dioxide to fuel cell 2 in the electrolysis mode, then methane can be directly produced in fuel cell 2 which can be transferred to the natural gas grid. For storage of oxygen and hydrogen, the gases can be compresses appropriately. As already outlined above fuel cell 2 can further comprise a reformer which may be integrated in fuel cell 2. This provides the option of providing synthesis gas including higher amounts of hydrocarbon to fuel cell 2 which is then converted into hydrogen in the reformer and subsequently reacted in the fuel cell reaction.

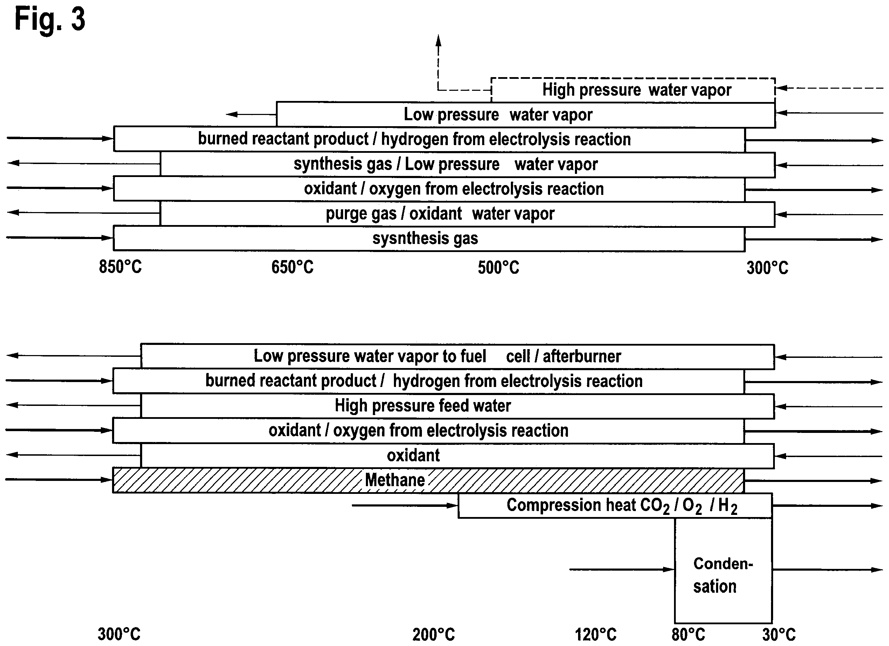

Figure 3 is a schematic view of a possible interconnection in the heat exchanger system of the fuel cell system of Figures 1 and 2. A kind of flow chart is shown which illustrate process streams of high temperature (passing from the left side of the flow chart to the right side) and process streams of low temperature (passing from the right side of the flow chart to the left side). High temperature process streams pass through the heat exchanger system and transfer heat while getting cooled from about 850 °C to about 30 °C.

In said heat exchanger system the heat exchangers are connected to each other to obtain one system which is a kind of onion layer system. In one layer one hot stream and one cold stream are coupled. Thereby heat transfer between all heat exchangers of the fuel cell system 1 is secured even in cases where some of the heat exchangers are not operated. In case thermal energy cannot be supplied sufficiently by the heat exchanger system, the combustion reaction in the afterburner can be promoted to produce additional heat.

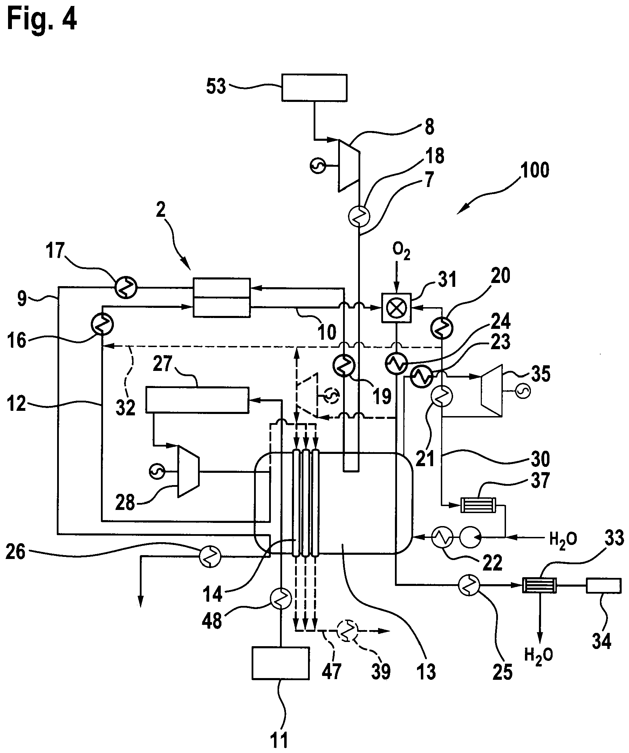

Figure 4 is a schematic diagram of a fuel cell system 100 according to a second embodiment. The fuel cell system 100 and thus, the fuel cell 2 is operated in the fuel cell mode. Thereby electric energy is produced from the fuel cell reaction of oxidant and hydrogen. Fuel cell system 100 is therefore comparable to fuel cell system 1 of Figure 1. As a difference, in fuel cell system 100 cold synthesis gas is provided from synthesis gas storage 11 to synthesis gas conduit 12. Therefore, the synthesis gas passes a low-temperature heat exchanger 48 prior to passing gas purifying device 27. Accordingly, no heat is transferred to the pressure boiler by the synthesis gas.

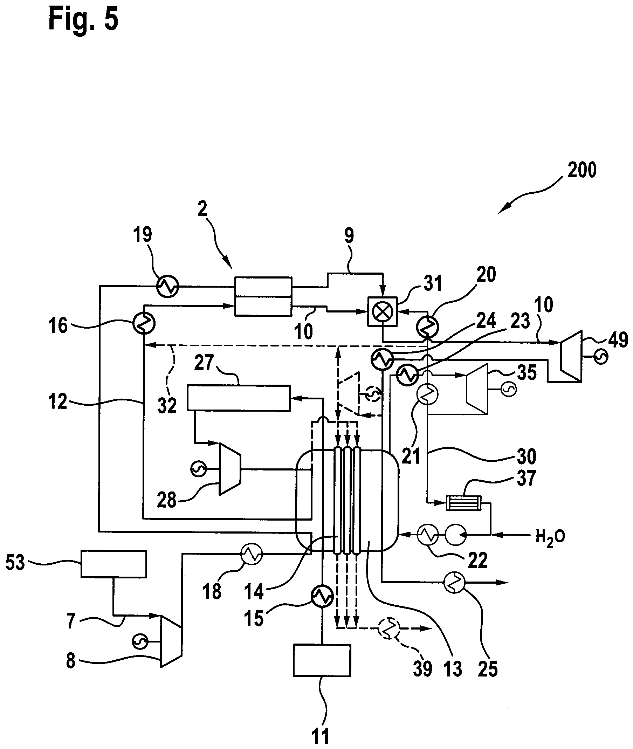

Figure 5 is a schematic diagram of a fuel cell system 200 according to a third embodiment. Fuel cell system 200 is again operated in the fuel cell mode. In this regard, fuel cell system 100 is comparable to fuel cell system 1 of Figure 1. However, oxidant electrode exhaust and reactant product are discharged from fuel cell 2 and supplied by oxidant electrode exhaust conduit 9 and reactant product conduit 10 to afterburner 31. The burned gas includes nitrogen, oxygen, carbon dioxide and water vapor and is transferred to gas turbine 49 (which alternatively can be an expander), where the burned gas is relaxed while electric energy is produced. Said electric energy can be supplied to a power supply system. After passing through gas turbine 49 the burned gas passes through heat exchanger 24. The reactant product conduit 10 is guided through pressure boiler 13 and passes through heat exchanger 25. In this embodiment carbon dioxide is not separated and burned reactant gas is discharged as burnt gas including nitrogen, oxygen, carbon dioxide and water. However, additional electric energy can be generated by use of gas turbine 49.

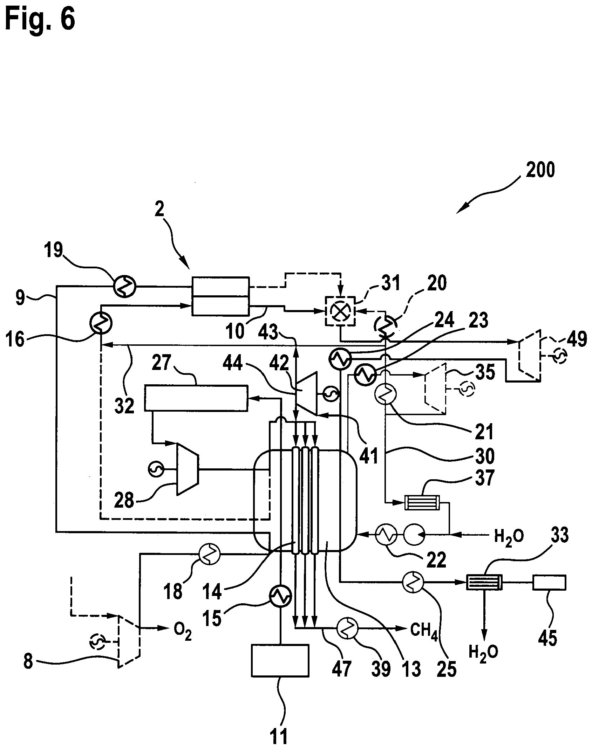

Figure 6 is a schematic diagram of the fuel cell system 200 of Figure 5 which is operated in the electrolysis mode. In this regard, fuel cell system 200 is comparable to fuel cell system 1 of Figure 2. In particular, reactant product including water vapor and hydrogen, the hydrogen being obtained by the electrolysis reaction and being discharged from fuel cell 2 is supplied by reactant product conduit 10 to gas turbine 49. In gas turbine 49 hydrogen and water are relaxed whereby electric energy is produced. Said electric energy can be used to promote the electrolysis reaction. After passing through gas turbine 49 reactant gas passes through heat exchanger 24. The reactant product conduit 10 is guided through pressure boiler 13 and passes through heat exchanger 25. Hydrogen and water are then discharged from fuel cell system 200. The advantage of the fuel cell system of this embodiment is that additional electric energy is produced in gas turbine 49 which contributes to saving electric energy for the electrolysis reaction. As an alternative, a mixture of hydrogen and water obtained and supplied through reactant product conduit 10 may be directly transferred to reactor 14 via branch point 41, compressor 42 and branch point 44.

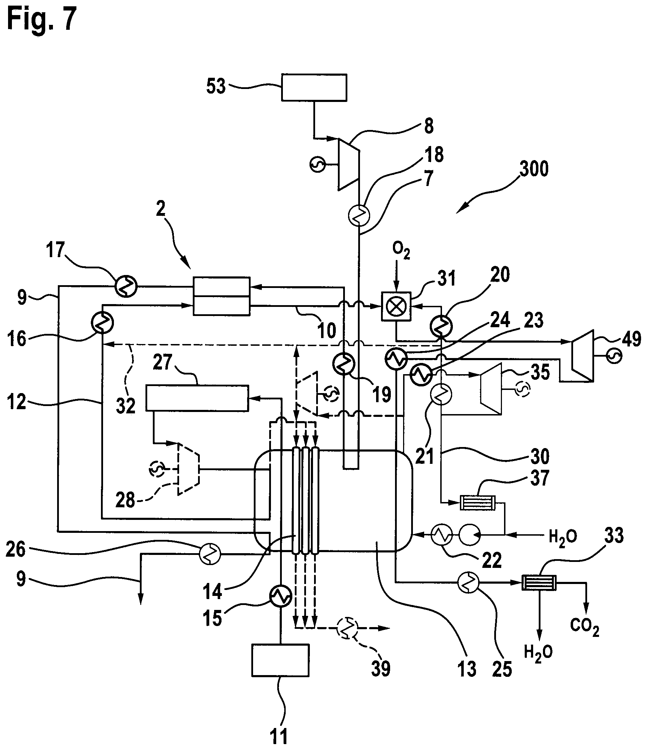

Figure 7 is a schematic diagram of a fuel cell system 300 according to a fourth embodiment. Fuel cell system 3 is operated in the fuel cell mode. In this regard, fuel cell system 300 is comparable to fuel cell system 1 of Figure 1. However, contrary to fuel cell system 1 of Figure 1, however, reactant product passes afterburner 31 and is then supplied via reactant product conduit 10 to gas turbine 49. In gas turbine 49 the burned reactant product including carbon dioxide and water is relaxed while electric energy is produced. Said electric energy can be used to promote the electrolysis reaction when the fuel cell system switches to operation in the electrolysis mode. After passing through gas turbine 49 burned and relaxed reactant product passes through heat exchanger 24. The reactant product conduit 10 is guided through pressure boiler 13 and passes through heat exchanger 25. Water is condensed in condenser 33 and remaining gaseous carbon dioxide can be stored. The advantages of the fuel cell system of this embodiment are that additional electric energy is produced in gas turbine 49, which increases the electrical efficiency and valuable carbon dioxide is produced and stored.

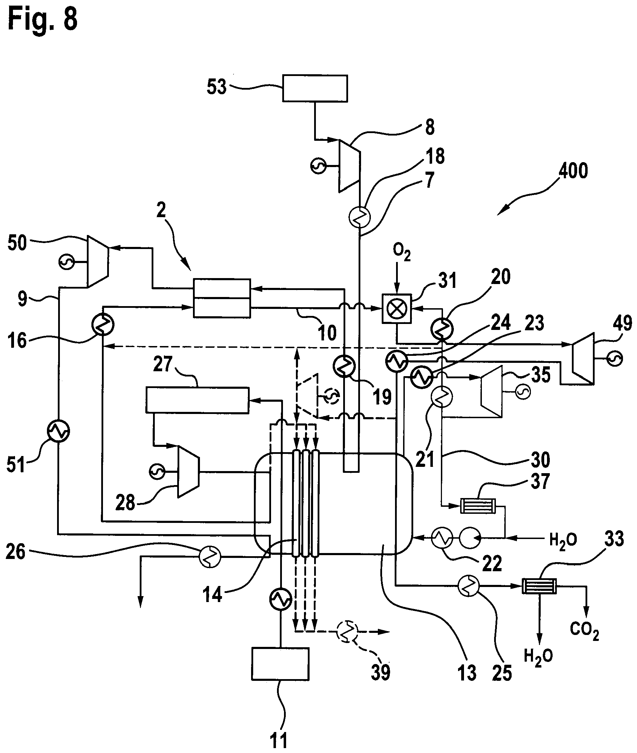

Figure 8 is a schematic diagram of a fuel cell system 400 according to a fifth embodiment. Fuel cell system 400 is operated in the fuel cell mode and is comparable to fuel cell system 300 of Figure 7. However, in addition to fuel cell system 300 of Figure 7 fuel cell system 400 of Figure 8 comprises a second gas turbine (or expander) 50 which is provided in oxidant electrode exhaust conduit 9. Oxidant electrode exhaust exits fuel cell 2 and is supplied via oxidant electrode exhaust conduit 9 to gas turbine 50. Here, the oxidant electrode exhaust is relaxed and electric energy can be obtained. Relaxed oxidant electrode exhaust further passes high-temperature heat exchanger 51 whereby additional waste heat can be saved.

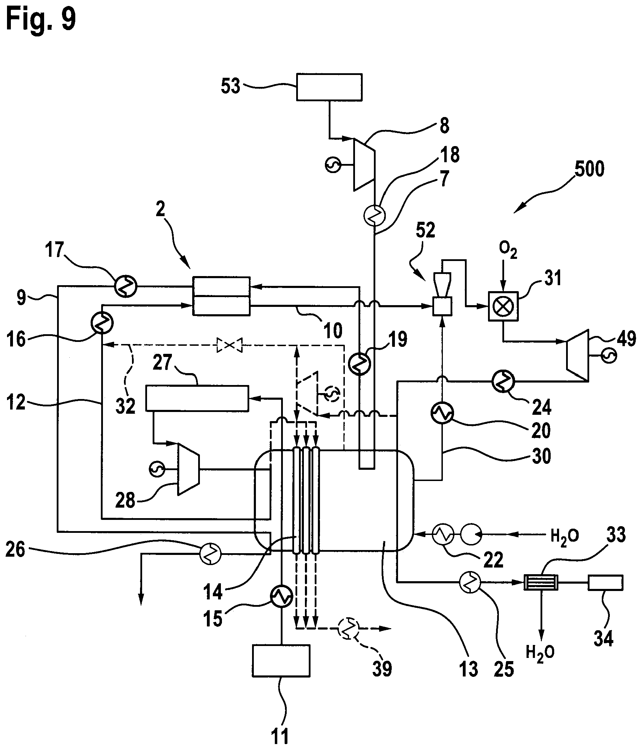

Figure 9 is a schematic diagram of a fuel cell system 500 according to a sixth embodiment. Fuel cell system 500 is operated in the fuel cell mode and is comparable to fuel cell system 1 of Figure 1. However, water vapor obtained by pressure boiler 13 exits pressure boiler 13 and is supplied via water transport conduit 30 and heat exchanger 20 to steam jet compressor 52. Reactant product exits fuel electrode 2b and is also supplied to steam jet compressor 52 via reactant product conduit 10. Reactant product and water having passed through steam jet compressor 52 are then supplied to afterburner 31, relaxed in water vapor turbine 35 to produce electric energy, and further supplied and reacted as shown analogously in Figure 1. Water obtained in condenser 33 may be used as feed water feeding water transport conduit 30.

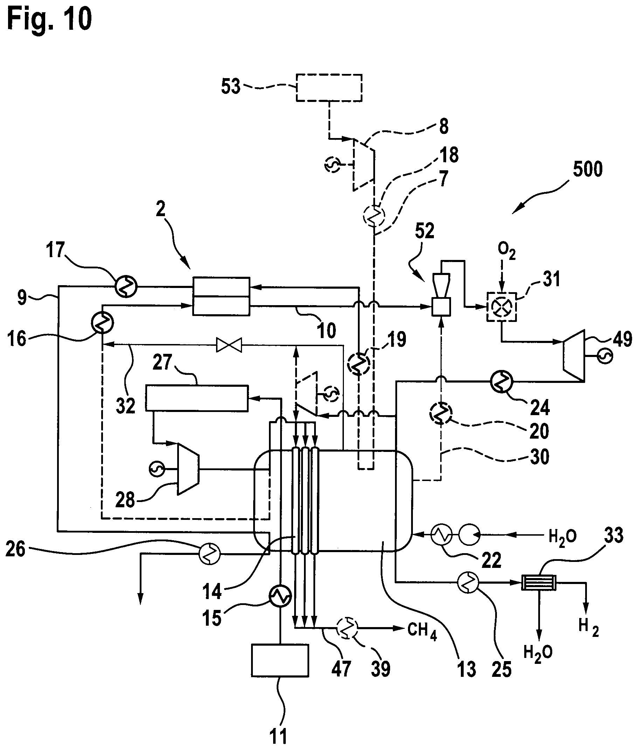

Figure 10 is a schematic diagram of fuel cell system 500 of Figure 9, wherein the fuel cell system 500 is operated in the electrolysis mode and in this regard is comparable to fuel cell system 1 of Figure 2. Water vapor obtained in pressure boiler 13 is transferred via water passage 32to fuel electrode 2b after passing through heat exchanger 16. Furthermore, as outlined with respect to fuel cell system 500 of Figure 9, reactant product including hydrogen and water is transferred through steam jet compressor 52, is subsequently relaxed in water vapor turbine 35 and further supplied and reacted as shown in Figure 2 to obtain hydrogen and water after condensing water in condenser 33. The condensed water may again be used as feed water for water transport conduit 30.

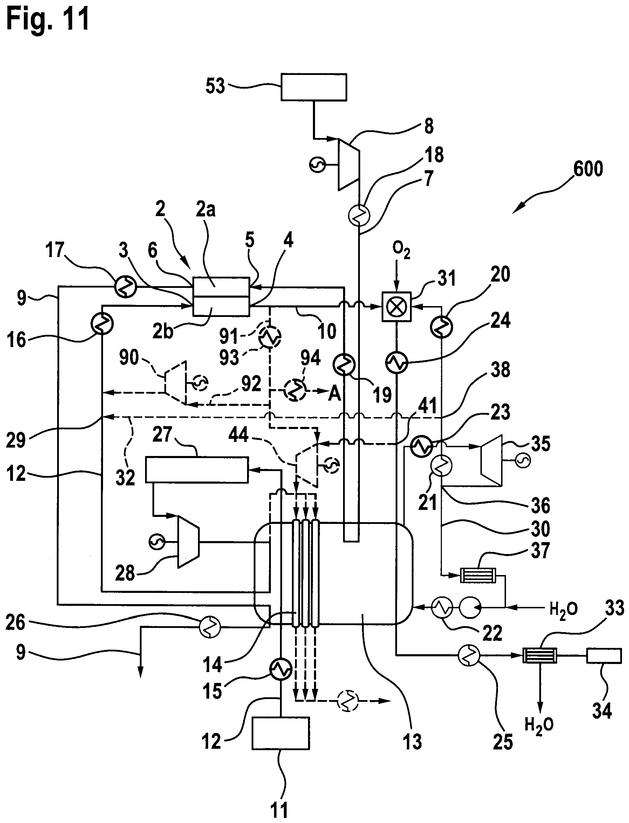

Figure 11 is a schematic diagram of a fuel cell system 600 according to a seventh embodiment. Fuel cell system 600 is operated in the fuel cell mode and is comparable to fuel cell system 1 of Figure 1. However, additionally the fuel cell system 600 comprises a fuel electrode circulation conduit 91 for circulating fuel electrode exhaust (reactant product) through the reversible fuel cell 2. Prior to entering the fuel electrode 2b, the reactant product may enter heat exchanger 16. In fuel electrode circulation conduit 91 heat exchangers 93, 94 and compressor 90 may be provided. At heat exchanger 94 extraction point A is provided at which burned fuel electrode exhaust may be extracted or additional hydrogen may be injected. The implementation of the fuel electrode circulation conduit 91 improves the flexibility of fuel cell system 1 since non-combusted fuel electrode exhaust which still contains about 20 vol.-% synthesis gas with reference to the composition of the synthesis gas can be supplied to fuel electrode 2b. The fuel electrode circulation conduit 91 can additionally branch off to reactor 14.

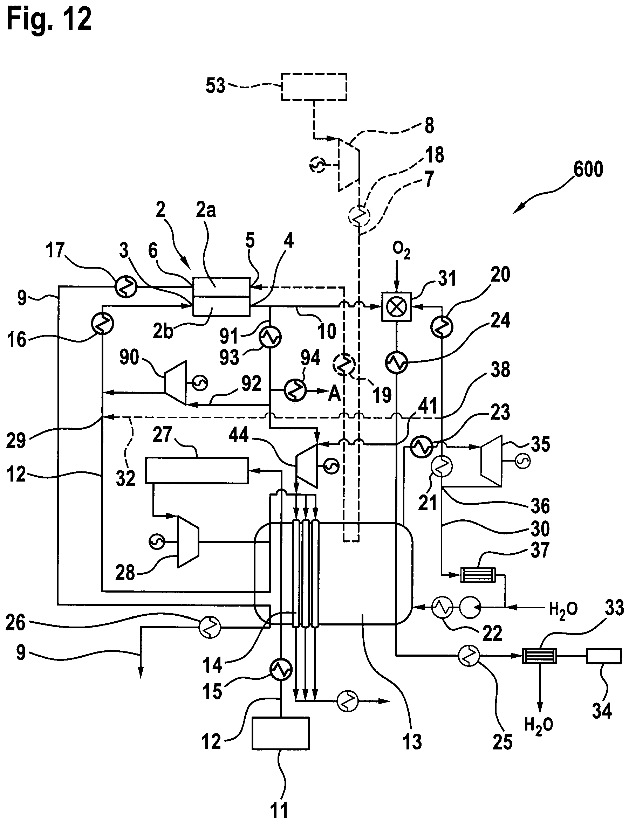

Figure 12 is a schematic diagram of fuel cell system 600 of Figure 11, wherein the fuel cell system 600 is operated in the electrolysis mode and in this regard is comparable to fuel cell system 1 of Figure 2. At extraction point A hydrogen and water may be extracted and an additional condenser may be implemented after heat exchanger 94. Alternatively or additionally, hydrogen and water may be transferred to reactor 14 via compressor 44. In the reactant product conduit 10 a shift-reactor may be implemented. The shift-reactor substitutes afterburner 31 in reactant product conduit 10, or the afterburner is used as a shift reactor, respectively. Via the oxygen supply path carbon dioxide may be added to shift-reactor31. Alternatively carbon dioxide may be directly supplied to the shift-reactor through a carbon dioxide conduit or the water vapor conduit from branch point 38 to shift-reactor 31. Preferably at high temperature of the fuel cell exhaust (e.g. at 800 °C) and particularly using a combustion catalyst, residual hydrogen from the fuel electrode exhaust (reactant product) in reactant product conduit 10 reacts with carbon dioxide to form a mixture including hydrogen, water, methane, carbon monoxide and carbon dioxide. Said mixture can easily react in a fuel synthesis reaction.

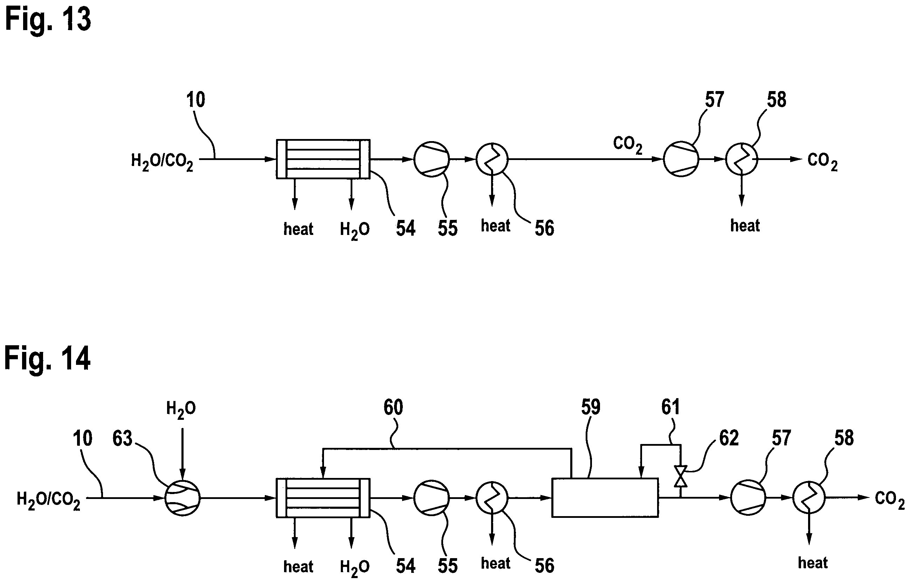

Figure 13 is a schematic diagram showing a more detailed view of the carbon dioxide separation flow according to a first embodiment. When the fuel cell system is operated in the fuel cell mode (see e.g. Figure 1), reactant product including carbon dioxide and water vapor is discharged from the fuel electrode side of the fuel cell, may be relaxed in a gas turbine or an expander, cooled by the heat exchanger system and then fed to a condenser 54. In condenser 54 water is condensed, i.e. liquefied, and discharged from condenser 54. Remaining carbon dioxide is compressed in compressor 55, passed through heat exchanger 56, whereby carbon dioxide is cooled. Then cooled carbon dioxide is passed through another compressor 57 and another heat exchanger 58. In sum, carbon dioxide remaining in the reactant product is compressed twice, whereby the temperature of the carbon dioxide is increased, but after each compressing step, compression heat is removed by passing carbon dioxide through one of the heat exchangers. Thereby carbon dioxide is liquefied and can be stored as fluid in a carbon dioxide storage. The removed waste heat can be used in the fuel cell system to heat up other media streams.

Figure 14 shows another exemplary schematic diagram of carbon dioxide separation. Again, reactant product including carbon dioxide and water vapor are discharged from the fuel cell, may be relaxed in a gas turbine or an expander and cooled by the heat exchanger system. However, in the schematic diagram of Figure 14 reactant gas is pre-compressed prior to being supplied to condenser 54 in a jet compressor 63. Again, in condenser 54, liquid water is separated and carbon dioxide passes through compressor 55 and heat exchanger 56 as outlined above. Thereafter, cooled carbon dioxide enters membrane 59. In membrane 59 remaining residual water is separated from carbon dioxide. Permeate (including water vapor and carbon dioxide) is transferred via bypass 60 to condenser 54 in case the permeate pressure is low and water can be condensed and discharged again from condenser 54. Remaining carbon dioxide again passes through compressor 55 and heat exchanger 56 and may then pass membrane 59 to enter compressor 57 and heat exchanger 58 to obtain liquid carbon dioxide. A part of the retentate including pure carbon dioxide can be used as purge gas at the permeate side of membrane 59. Hereby, to regenerate membrane 59, bypass 61 is provided which includes valve 62. Valve 62 is preferably a throttle valve which usually is open. If valve 62 is open, then purge gas including carbon dioxide enters bypass 61 and is transferred back to membrane 59 to purge the same which is favorable since expanded carbon dioxide can absorb more water.

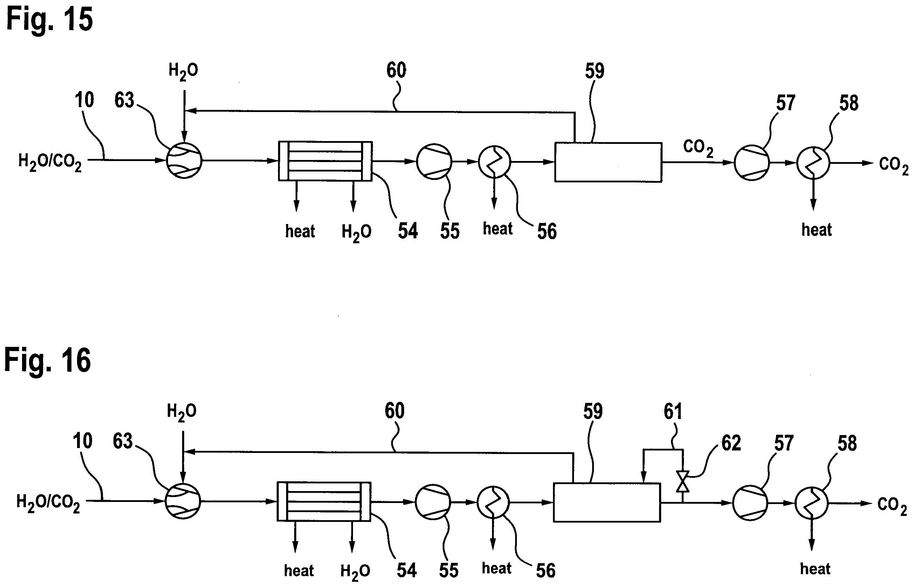

Figure 15 shows another example of a schematic diagram for separation of carbon dioxide. The schematic diagram of Figure 15 is almost comparable to the schematic diagram of Figure 14. However, permeate obtained in membrane 59 is transferred back to jet compressor 63 via bypass 60 instead of being transferred to condenser 54. The pressure of permeate obtained in membrane 59 can be used in jet compressor 63 when the permeate pressure is high enough (at about 2-8 bar).

Figure 16 shows another example of a schematic diagram for separation of carbon dioxide. The schematic diagram of Figure 16 is almost comparable to the schematic diagram of Figure 15. However, between membrane 59 and compressor 57, bypass 61 is provided as shown in Figure 14 and membrane 59 can be purged with purge gas.

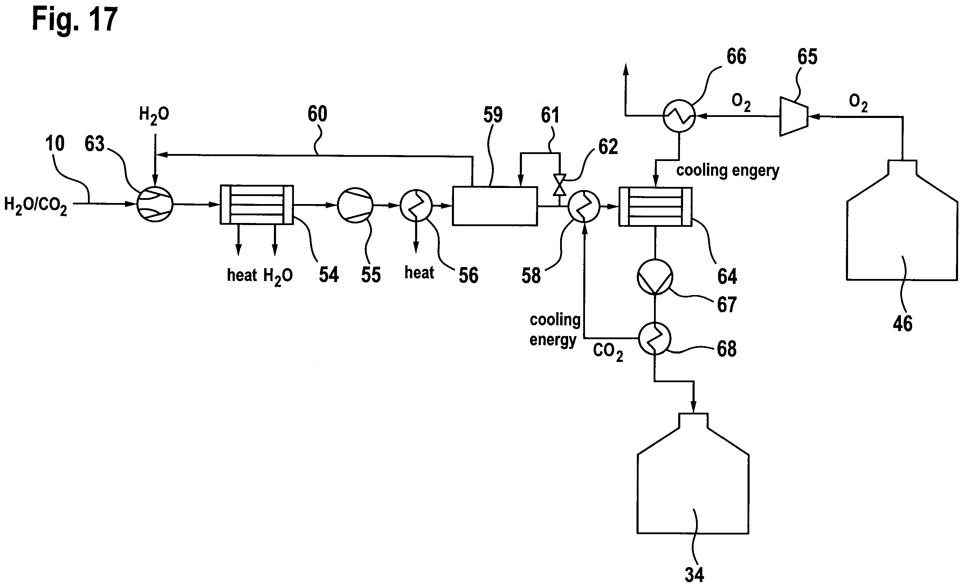

Figure 17 shows another example of a schematic diagram for separation of carbon dioxide. The schematic diagram of Figure 17 is almost comparable to the schematic diagram of Figure 16. However, downstream of membrane 59 heat exchanger 58 and a further condenser 64 are provided. Oxygen is supplied from oxygen storage 46 via an oxygen conduit to expander 65, whereby oxygen is transferred from high pressure (exemplarily about 300 bar) to lower pressure (about 1 bar - depending on a suitable pressure for oxygen used in further applications). Oxygen is then transferred to heat exchanger 66, heated up which transfers cooling energy from the expansion reaction of oxygen to condenser 64 for supporting the condensation of carbon dioxide. Carbon dioxide obtained in condenser 64 is pumped by pump 67 and passed through heat exchanger 68. Liquefied carbon dioxide is then stored in carbon dioxide storage 34 and cooling energy from heat exchanger 68 is transferred to heat exchanger 58, thus, increasing the cooling performance of heat exchanger 58. In this system sensitive cooling energy is used via recuperation. This system is particularly useful in case of high oxygen consumption in view of carbon dioxide storage (oxygen mass flow >> carbon dioxide mass flow).

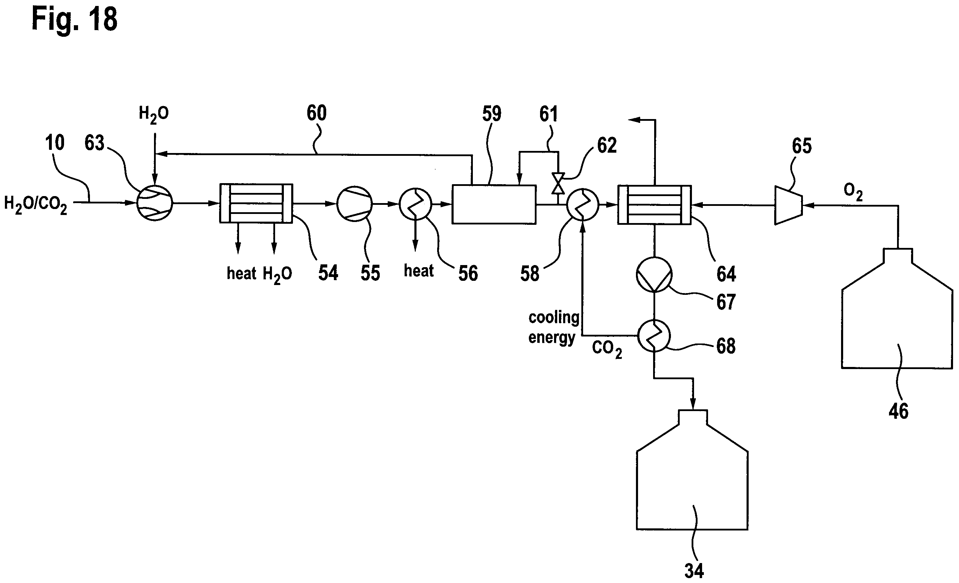

Figure 18 shows another example of a schematic diagram for separation of carbon dioxide. The schematic diagram of Figure 18 is almost comparable to the schematic diagram of Figure 17. However, oxygen from oxygen storage 46 is directly supplied to condenser 64 after having passed expander 65. In expander 65 the oxygen pressure is reduced from about 300 bar to 30 bar and cooling energy from the expansion reaction of oxygen is directly transferred to condenser 64 which may be a direct-contact-condenser. In this system sensitive cooling energy is used via recuperation. This system is also particularly useful in case of high oxygen consumption in view of carbon dioxide storage (oxygen mass flow >> carbon dioxide mass flow).

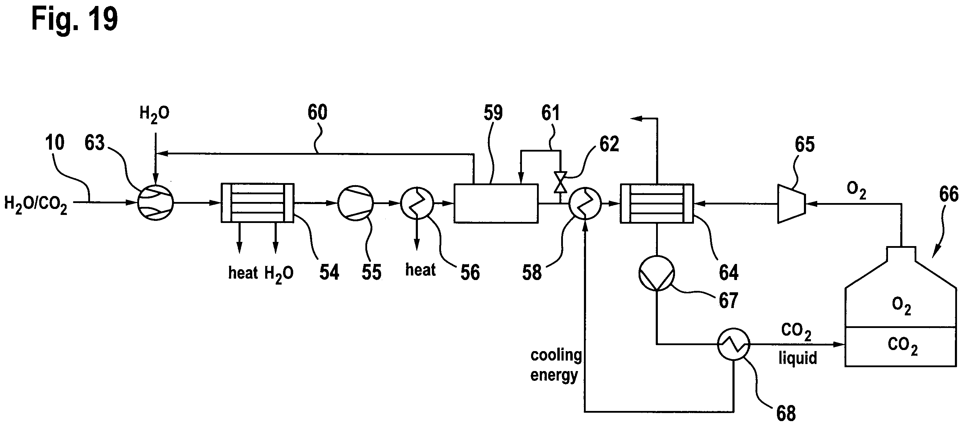

Figure 19 shows another example of a schematic diagram for separation of carbon dioxide. The schematic diagram of Figure 19 is almost comparable to the schematic diagram of Figure 18. However, instead of two separate storages (oxygen storage 46 and carbon dioxide storage 34) a mixed storage 66 is used for storing oxygen and carbon dioxide in separate phases.

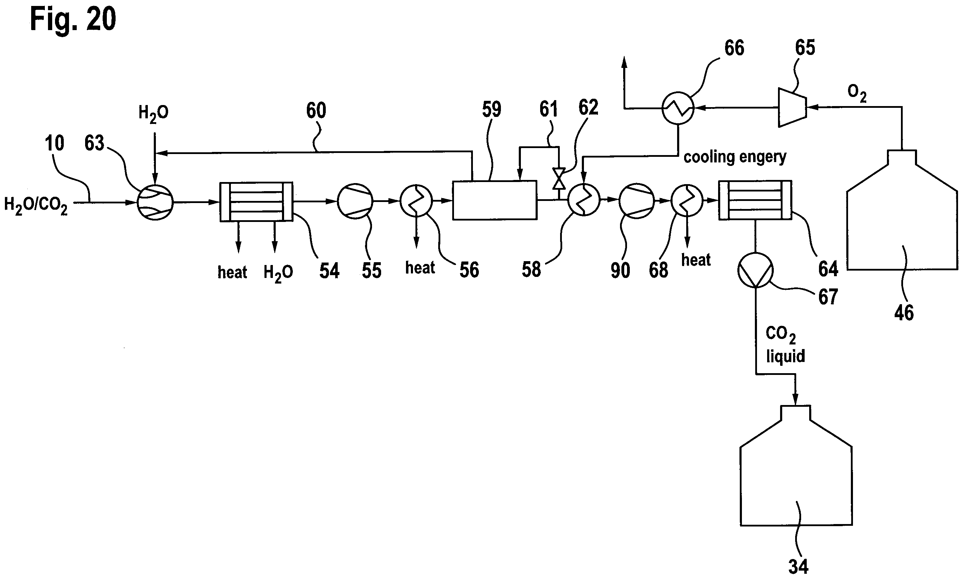

Figure 20 shows an example of a schematic diagram for separation of carbon dioxide. The schematic diagram of Figure 20 is almost comparable to the schematic diagram of Figure 17. However, cooling energy from the expansion reaction of oxygen in expander 65 is transferred from heat exchanger 66 to heat exchanger 58 for pre-cooling carbon dioxide obtained in membrane 59. The carbon dioxide again passes a compressor 90 and heat exchanger 68 before entering condenser 64 where carbon dioxide is liquefied, pumped via pump 67 and stored in carbon dioxide storage 34. Thermal energy can be used in the fuel cell system or can be used in the district heating system. This system is particularly useful in case of low oxygen consumption in view of carbon dioxide storage (oxygen mass flow << carbon dioxide mass flow).

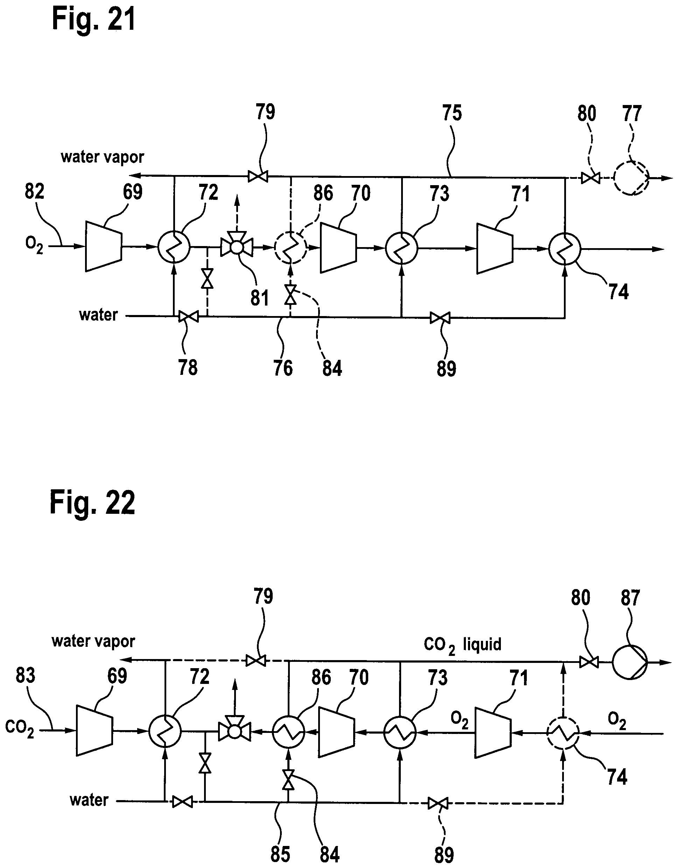

Figure 21 is a schematic diagram for illustrating the flow of oxygen during oxygen separation. Herein, oxygen is transferred to a three-stage compression at three compressors 69, 70 and 71. After each compressor a heat exchanger 72, 73, 74 is arranged for cooling the compressed oxygen. Heat from heat exchangers 72, 73 and 74 is transferred to conduit 75 which transports water vapor. The water vapor is obtained by flowing water through conduit 76 which crosses heat exchangers 72, 73, 74 at different locations and absorbs the heat transferred from the heat exchangers. Water vapor can be supplied throughout the fuel cell system (and may be used in the electrolysis reaction for example). Valves 78, 79, 80, 81 and 89 allow selective transfer of oxygen, water or water vapor through conduits 75, 76 and 82.

An additional heat exchanger 86 is provided in subsequent order to valve 81 which is connected to conduit 85 vial valve 84. The gist of this system is the double use of carbon dioxide compression device. On the one hand, when the system is in the fuel cell mode, carbon dioxide is compressed while oxygen is supplied to afterburner 31. Thereby the oxygen is expanded and cooling energy obtained by the expansion can be used to reduce energy necessary for compression of carbon dioxide. On the other hand, when the system is in the electrolysis mode, the device can be used to compress oxygen for storage compression heat obtained thereby can be used for generation of water vapor for the electrolysis reaction.

Figure 22 is another schematic diagram for illustrating withdrawal of carbon dioxide. Herein, carbon dioxide is compressed in compressor 69 and cooled in heat exchanger 72. Waste heat from heat exchanger 72 can be used to evaporate water passing through heat exchanger 72. Pre-cooled carbon dioxide is then transferred to heat exchanger 86 and 73 taking up cooling energy, whereby the carbon dioxide is liquefied and pumped by pump 87. The cooling energy is originated from oxygen which has been pre-cooled in heat exchanger, expanded twice in compressors 71 and 70 which are operated in reverse mode. Between compressors 71 and 70 heat exchanger 73 is arranged. An additional heat exchanger 86 is installed between heat exchanger 72 and compressor 70 which connects conduit 85 to conduit 83 via valve 84. Oxygen is extracted via valve 81. In this embodiment carbon dioxide is liquefied at a temperature below environmental temperature.

While embodiments of the invention have been illustrated and described, it is not intendeds that these embodiments illustrate and describe all possible forms of the invention. The words used in the specification are words of description rather than limitation, and it is understood that various changes may be made without departing from the scope of the invention.

### Explanation of reference numbers

- 1: Fuel cell system
- 2: Fuel cell
- 2a: oxidant electrode
- 2b: fuel electrode
- 3: fuel electrode inlet
- 4: fuel electrode outlet
- 5: oxidant electrode inlet
- 6: oxidant electrode outlet
- 7: oxidant conduit
- 8: compressor
- 9: oxidant electrode exhaust conduit
- 10: reactant product conduit
- 11: synthesis gas storage
- 12: synthesis gas conduit
- 13: pressure boiler
- 14: reactor
- 15: heat exchanger
- 16: heat exchanger
- 17: heat exchanger
- 18: heat exchanger
- 19: heat exchanger
- 20: heat exchanger
- 21: heat exchanger
- 22: heat exchanger
- 23: heat exchanger
- 24: heat exchanger
- 25: heat exchanger
- 26: heat exchanger
- 27: gas purifying device
- 28: compressor
- 29: branch point
- 30: water transport conduit
- 31: afterburner
- 32: passage
- 33: condenser
- 34: carbon dioxide storage
- 35: water vapor turbine
- 36: branch point
- 37: condenser
- 38: branch point
- 39: heat exchanger
- 40: branch point
- 41: branch point
- 42: compressor
- 43: branch point
- 44: branch point
- 45: hydrogen storage
- 46: oxygen storage
- 47: reactor conduit
- 48: heat exchanger
- 49: gas turbine
- 50: gas turbine
- 51: heat exchanger
- 52: steam jet compressor
- 53: oxidant storage
- 54: condenser
- 55: compressor
- 56: heat exchanger
- 57: compressor
- 58: heat exchanger
- 59: membrane
- 60: bypass
- 61: bypass
- 62: valve
- 63: jet compressor
- 64: oxygen conduit
- 65: expander
- 66: heat exchanger
- 67: pump
- 68: heat exchanger
- 69: expander
- 70: expander
- 71: expander
- 72: heat exchanger
- 73: heat exchanger
- 74: heat exchanger
- 75: conduit
- 76: conduit
- 77: pump
- 78: valve
- 79: valve
- 80: valve
- 81: valve
- 82: conduit
- 83: conduit
- 84: valve
- 85: conduit
- 86: heat exchanger
- 87: pump
- 88: heat exchanger
- 89: valve
- 90: compressor
- 91: fuel electrode circulation conduit
- 92: carbon dioxide conduit
- 93: heat exchanger
- 94: heat exchanger
- 95: shift-reactor
- 100: fuel cell system
- 200: fuel cell system
- 300: fuel cell system
- 400: fuel cell system
- 500: fuel cell system
- 600: fuel cell system

## Claims

1. A fuel cell system comprising at least one reversible fuel cell (2) arranged to cyclically or alternately operate in a fuel cell mode to generate electrical energy and reactant product from fuel and an oxidant and in an electrolysis mode to generate hydrogen and an oxidant from the reactant product, a pressure boiler (13), the pressure boiler (13) including a reactor (14) for generating hydrocarbon fuel, a synthesis gas storage (11) connected with a fuel electrode inlet (3) of the reversible fuel cell (2) via a synthesis gas conduit (12), a fuel electrode outlet (4) of the reversible fuel cell (2) connected to a reactant product conduit (10), an oxidant storage (53), connected to the oxidant electrode inlet (5) of the reversible fuel cell (2) via an oxidant conduit (7), an oxidant electrode outlet (6) connected to an oxidant electrode exhaust conduit (9), and a heat exchanger system for receiving and releasing heat, wherein
- the synthesis gas conduit (12), the reactant product conduit (10), the oxidant conduit (7) and the oxidant electrode exhaust conduit (9) are guided through the pressure boiler (13), and wherein
- the pressure boiler (13) is integrated in a water transport conduit (30).

2. The fuel cell system of claim 1, wherein the water transport conduit (30) comprises a water vapor turbine (35).

3. The fuel cell system of claim 1 or 2, comprising a hydrogen storage (45) for storing hydrogen produced in the reversible fuel cell (2) operated in the electrolysis mode.

4. The fuel cell system according to any of the preceding claims,
- comprising an oxygen storage (46) for storing oxygen produced in the reversible fuel cell (2) operated in the electrolysis mode and/or
- comprising a condenser for condensing unreacted water and/or
- wherein the synthesis gas conduit (12) comprises a gas purifying device (27) and/or a compressor (28) for purifying and/or compressing synthesis gas and/or
- wherein the water transport conduit (30) is connected to the synthesis gas conduit (12) and/or
- comprising an oxidant electrode circulation conduit for circulating oxidant electrode exhaust through the reversible fuel cell (2) and/or a fuel electrode circulation conduit (91) for circulating fuel electrode exhaust through the reversible fuel cell (2) and/or
- wherein the reactant product conduit (10) comprises a reaction device which can be used as an afterburner (31) for burning the reactant product in the fuel cell mode to produce water and carbon dioxide or a high temperature shift-reactor (95) and/or
- wherein the reactant product conduit (10) and/or the oxidant conduit (9) comprises a gas turbine (49) or an expander and/or
- wherein the reactant product conduit (10) is connected to the heat exchanger system and/or comprises a condenser (33) for condensing water in the reactant product in the fuel cell mode and/or
- comprising a carbon dioxide separation device and/or a carbon dioxide storage (34) and/or
- wherein the synthesis gas conduit (12) is connected to a fuel electrode circulation conduit (91) and/or
- wherein a reactor outlet is connected to the synthesis gas conduit (12) and/or
- comprising a device for generating synthesis gas according to a biological or thermochemical reaction.

5. A method of operating a fuel cell system comprising at least one reversible fuel cell (2) arranged to cyclically or alternately operate in a fuel cell mode to generate electrical energy and reactant product from fuel and an oxidant and in an electrolysis mode to generate hydrogen and an oxidant from the reactant product, a pressure boiler (13), the pressure boiler (13) including a reactor (14) for generating hydrocarbon fuel, a synthesis gas storage (11) connected with a fuel electrode inlet (3) of the reversible fuel cell (2) via a synthesis gas conduit (12), a fuel electrode outlet (4) of the reversible fuel cell (2) connected to a reactant product conduit (10), an oxidant storage (53), connected to the oxidant electrode inlet (5) of the reversible fuel cell (2) via an oxidant conduit (7), an oxidant electrode outlet (6) connected to an oxidant electrode exhaust conduit (9), and a heat exchanger system for storing and releasing heat, wherein
- the synthesis gas conduit (12), the reactant product conduit (10), the oxidant conduit (7) and the oxidant electrode exhaust conduit (9) are guided through the pressure boiler (13), wherein
- the pressure boiler (13) is integrated in a water transport conduit (30), wherein
- in the fuel cell mode synthesis gas is supplied from the synthesis gas storage (11) to the fuel electrode (2b), oxidant is supplied from the oxidant storage (53) to the oxidant electrode (2a), and reactant product, water and electricity are produced, wherein
o waste heat from the reactant product is transferred to the heat exchanger system, wherein
o waste heat from the oxidant electrode exhaust is transferred to the heat exchanger system, wherein
- in the electrolysis mode synthesis gas is supplied via the synthesis gas conduit (12) to the reactor (14), reacted in the reactor (14) to produce hydrocarbon fuel and waste heat from the production reaction of hydrocarbon fuel is used to evaporate water in the pressure boiler (13), wherein
o water is supplied to the reversible fuel cell (2) and electrolyzed to produce hydrogen and oxygen.

6. The method of claim 5, wherein
- the water transport conduit (30) comprises a water vapor turbine (35), and wherein evaporated water is at least partially relaxed in the water vapor turbine (35) and/or
- wherein in the electrolysis mode hydrogen produced in the reversible fuel cell (2) or stored in a hydrogen storage (45) is supplied to the reactor (14) to support the generation of hydrocarbon fuel and/or
- wherein in the electrolysis mode, oxygen produced in the reversible fuel cell (2) is stored in an oxygen storage (46) and waste heat from the oxygen is transferred to the heat exchanger system and/or
- wherein in the electrolysis mode, unreacted water from the electrolysis reaction is condensed and compressed and waste heat is transferred to the heat exchanger system and/or wherein in the electrolysis mode gas streams from the oxidant electrode (2a) and/or the fuel electrode (2b) are cooled by the heat exchanger system, water is condensed and hydrogen and/or oxygen are compressed for storing and/or
- wherein in the electrolysis mode carbon dioxide is supplied to the reversible fuel cell (2) and methane is generated in the fuel electrode of the reversible fuel cell (2) by the reaction of carbon dioxide and hydrogen and/or
- wherein in the fuel cell mode or in the electrolysis mode gas streams from the oxidant electrode (2a) and/or the fuel electrode (2b) of the reversible fuel cell (2) are relaxed in a gas turbine (49) or an expander and/or
- wherein in the fuel cell mode, the synthesis gas to be supplied to the fuel electrode (2b) is purified in a gas purifying device (27) and/or compressed in a compressor (28), wherein waste heat from the compressed synthesis gas is used to vaporize water in the pressure boiler (13) and/or
- wherein in the fuel cell mode, the synthesis gas to be supplied to the fuel electrode (2b) is enriched with water vapor from the water transport conduit (30).

7. The method according to claim 5 or 6, wherein in the fuel cell mode, the reactant product is treated by a shift-reactor or is burned in an afterburner (31) to produce water and carbon dioxide, wherein waste heat from the afterburner (31) is transferred to the heat exchanger system and/or the water transport conduit (30) and/or is used to heat feed water supplied to the water transport conduit (30), wherein preferably oxidant used to burn reactant product in the afterburner (31) is oxygen obtained in the electrolysis mode and/or is oxidant electrode exhaust gas.

8. The method according to claim 6, wherein the gas turbine (49) and/or the water vapor turbine (35) are operated by a direct current converter or a direct current generator.

9. The method of any of claims 5 to 8, wherein in the fuel cell mode water in the reactant product is condensed in a condenser (33) and carbon dioxide in the reactant product is compressed and cooled until the carbon dioxide is liquefied and then stored in a carbon dioxide storage (34).

10. The method of any of claims 5 to 9, wherein in the fuel cell mode, synthesis gas is purified in a gas purifying device (27) and supplied to the reactor (14) to produce hydrocarbon fuel and heat produced during the generation of hydrocarbon fuel is used to boil water in the pressure boiler (13) and a share of 0 to 100% of the hydrocarbon fuel is mixed with the synthesis gas to be supplied to the fuel electrode (2b).

11. The method of any of claims 5 to 10, wherein the synthesis gas is produced by biological or thermochemical reaction and waste heat is transferred to the heat exchanger system and/or is used to evaporate water in the pressure boiler (13).

## Patentansprüche

1. Brennstoffzellensystem, umfassend wenigstens eine reversible Brennstoffzelle (2), welche eingerichtet ist, um zyklisch oder wechselnd in einem Brennstoffzellen-Modus zur Erzeugung elektrischer Energie und Reaktionsprodukte aus einem Brennstoff und einem Oxidator und in einem Elektrolyse-Modus zur Erzeugung von Wasserstoff und einem Oxidator aus dem Reaktionsprodukt betrieben zu werden, einen Druckkessel (13), wobei der Druckkessel (13) einen Reaktor (14) zur Erzeugung von Kohlenwasserstoff-Brennstoff aufweist, einen Synthesegas-Speicher (11), der mit einem Brennstoffelektroden-Einlass (3) der reversiblen Brennstoffzelle (2) über eine Synthesegas-Leitung (12) verbunden ist, einen Brennstoffelektroden-Auslass (4) der reversiblen Brennstoffzelle (2), der mit einer Reaktionsprodukt-Leitung (10) verbunden ist, einen Oxidator-Speicher (53), der mit dem Oxidatorelektroden-Einlass (5) der reversiblen Brennstoffzelle (2) über eine Oxidator-Leitung (7) verbunden ist, einen Oxidatorelektroden-Auslass (6), der mit einer Oxidatorelektroden-Abgas-Leitung (9) verbunden ist, und ein Wärmeübertrager-System zum Aufnehmen und Freigeben von Wärme, wobei
- die Synthesegas-Leitung (12), die Reaktionsprodukt-Leitung (10), die Oxidator-Leitung (7) und die Oxidatorelektroden-Abgas-Leitung (9) durch den Druckkessel (13) geführt sind, und wobei
- der Druckkessel (13) in eine Wasser-Transportleitung (30) integriert ist.

2. Brennstoffzellensystem nach Anspruch 1, wobei die Wasser-Transportleitung (30) eine Wasser-Dampfturbine (35) umfasst.

3. Brennstoffzellensystem nach Anspruch 1 oder 2, umfassend einen Wasserstoff-Speicher (45) zur Speicherung von Wasserstoff, der von der im Elektrolyse-Modus betriebenen reversiblen Brennstoffzelle (2) produziert ist.

4. Brennstoffzellensystem nach einem der vorhergehenden Ansprüche,
- umfassend einen Sauerstoff-Speicher (46) zur Speicherung von Sauerstoff, der von der im Elektrolyse-Modus betriebenen reversiblen Brennstoffzelle (2) produziert ist und/oder
- umfassend einen Kondensator zur Kondensierung von unreagiertem Wasser und/oder
- wobei die Synthesegas-Leitung (12) eine Gasreinigungsvorrichtung (27) und/oder einen Kompressor (28) zur Reinigung und/oder Komprimierung des Synthesegases umfasst und/oder
- wobei die Wasser-Transportleitung (30) mit der Synthesegas-Leitung (12) verbunden ist und /oder
- umfassend eine Oxidatorelektroden-Zirkulations-Leitung zum Zirkulieren von Oxidatorelektroden-Abgas durch die reversible Brennstoffzelle (2) und/oder eine Brennstoffelektroden-Zirkulations-Leitung (91) zum Zirkulieren von Brennstoffelektroden-Abgas durch die reversible Brennstoffzelle (2) und/oder
- wobei die Reaktionsprodukt-Leitung (10) eine Reaktionsvorrichtung, welche als Nachverbrenner (31) verwendet werden kann zur Verbrennung des Reaktionsprodukts in dem Brennstoffzellenmodus, um Wasser und Kohlenstoffdioxid zu produzieren, oder einen Hochtemperatur-Konvertierungs-Reaktor (95) umfasst, und/oder
- wobei die Reaktionsprodukt-Leitung (10) und/oder die Oxidator-Leitung (9) eine Gasturbine (49) oder einen Diffusor umfasst und/oder
- wobei die Reaktionsprodukt-Leitung (10) mit dem Wärmeübertrager-System verbunden ist und/oder einen Kondensator (33) zur Kondensierung von Wasser in dem Reaktionsprodukt im Brennstoffzellenmodus umfasst und/oder
- umfassend eine Kohlenstoffdioxid-Abscheidungs-Vorrichtung und/oder einen Kohlenstoffdioxid-Speicher (34) und/oder
- wobei die Synthesegas-Leitung (12) mit einer Brennstoffelektroden-Zirkulations-Leitung (91) verbunden ist und/oder
- wobei ein Reaktorauslass mit der Synthesegas-Leitung (12) verbunden ist und/oder
- umfassend eine Vorrichtung zur Erzeugung von Synthesegas gemäß einer biologischen oder thermochemischen Reaktion

5. Verfahren zum Betreiben eines Brennstoffzellensystems, umfassend wenigstens eine reversible Brennstoffzelle (2), welche eingerichtet ist, um zyklisch oder wechselnd in einem Brennstoffzellen-Modus zur Erzeugung elektrischer Energie und Reaktionsprodukte aus Brennstoff und einem Oxidator, und in einem Elektrolyse-Modus zur Erzeugung von Wasserstoff und einem Oxidator aus dem Reaktionsprodukt betrieben zu werden, einen Druckkessel (13), wobei der Druckkessel (13) einen Reaktor (14) zur Erzeugung von Kohlenwasserstoff-Brennstoff, einen Synthesegas-Speicher (11), der mit einem Brennstoffelektroden-Einlass (3) der reversiblen Brennstoffzelle (2) über eine Synthesegas-Leitung (12) verbunden ist, einen Brennstoffelektroden-Auslass (4) der reversiblen Brennstoffzelle (2), der mit einer Reaktionsprodukt-Leitung (10) verbunden ist, einen Oxidator-Speicher (53), der mit dem Oxidatorelektroden-Einlass (5) der reversiblen Brennstoffzelle (2) über eine Oxidator-Leitung (7) verbunden ist, einen Oxidatorelektroden-Auslass (6), der mit einer Oxidatorelektroden-Abgas-Leitung (9) verbunden ist, und ein Wärmeübertrager-System zum Speichern und Freigeben von Wärme, wobei
- die Synthesegas-Leitung (12), die Reaktionsprodukt-Leitung (10), die Oxidator-Leitung (7) und die Oxidatorelektroden-Abgas-Leitung (9) durch den Druckkessel (13) geführt sind, und wobei
- der Druckkessel (13) in eine Wasser-Transportleitung (30) integriert ist, wobei
- in dem Brennstoffzellen-Modus Synthesegas aus dem Synthesegas-Speicher (11) der Brennstoff-Elektrode (2b) bereitgestellt wird, wobei Oxidator aus dem Oxidator-Speicher (53) der Oxidator-Elektrode (2a) bereitgestellt wird, und wobei Reaktionsprodukte, Wasser und Elektrizität produziert werden, wobei
• Verlustwärme von dem Reaktionsprodukt auf das Wärmeübertrager-System übertragen wird, wobei
• Verlustwärme von dem Oxidatorelektroden-Abgas auf das Wärmeübertrager-System übertragen wird, wobei
- in dem Elektrolyse-Modus Synthesegas über die Synthesegas-Leitung (12) dem Reaktor (14) bereitgestellt wird, wobei in dem Reaktor reagiertes Synthesegas zum Produzieren von Kohlenwasserstoff-Brennstoff und Verlustwärme aus der Produktionsreaktion von Kohlenwasserstoff-Brennstoff verwendet wird, um Wasser in dem Druckkessel (13) zu verdampfen, wobei
• Wasser der reversiblen Brennstoffzelle (2) bereitgestellt wird und elektrolysiert wird, um Wasserstoff und Sauerstoff zu produzieren.

6. Verfahren nach Anspruch 5, wobei
- die Wasser-Transportleitung (30) eine Wasser-Dampfturbine (35) umfasst, und wobei verdampftes Wasser wenigstens teilweise in der Wasser-Dampfturbine (35) entspannt wird und/oder
- wobei in dem Elektrolyse-Modus Wasserstoff, welcher in der reversiblen Brennstoffzelle (2) produziert wurde oder in dem Wasserstoff-Speicher (45) gespeichert wurde, dem Reaktor (14) bereitgestellt wird, um die Erzeugung von Kohlenwasserstoff-Brennstoff zu fördern und/oder
- wobei in dem Elektrolyse-Modus Sauerstoff, welcher in der reversiblen Brennstoffzelle (2) produziert wurde, in dem Sauerstoff-Speicher (46) gespeichert wird und wobei Verlustwärme von dem Sauerstoff auf das Wärmeübertrager-System übertragen wird und/oder
- wobei in dem Elektrolyse-Modus unreagiertes Wasser aus der Elektrolyse-Reaktion kondensiert und komprimiert wird und Verlustwärme auf das Wärmeübertrager-System übertragen wird und/oder wobei in dem Elektrolyse-Modus Gas-Strömungen von der Oxidator-Elektrode (2a) und/oder der Brennstoff-Elektrode (2b) durch das Wärmeübertrager-System gekühlt werden, wobei Wasser kondensiert wird und Wasserstoff und/oder Sauerstoff für eine Speicherung komprimiert werden und/oder
- wobei in dem Elektrolyse-Modus Kohlenstoffdioxid der reversiblen Brennstoffzelle (2) bereitgestellt wird und Methan in der Brennstoff-Elektrode der reversiblen Brennstoffzelle (2) durch die Reaktion von Kohlenstoffdioxid und Wasserstoff erzeugt wird und/oder
- wobei in dem Brennstoffzellen-Modus oder in dem Elektrolyse-Modus Gas von der Oxidator-Elektrode (2a) und/oder der Brennstoff-Elektrode (2b) der reversiblen Brennstoffzelle (2) in einer Gasturbine (49) oder in einem Diffusor entspannt werden und/oder
- wobei in dem Brennstoffzellen-Modus das Synthesegas, welches der Brennstoffelektrode (2b) bereitgestellt wird, in einer Gasreinigungsvorrichtung (27) gereinigt wird und/oder in einem Kompressor (28) komprimiert wird, wobei Verlustwärme von dem komprimierten Synthesegas verwendet wird, um Wasser in dem Druckkessel (13) zu verdampfen und/oder
- wobei in dem Brennstoffzellen-Modus das Synthesegas, welches der Brennstoffelektrode (2b) bereitgestellt wird, mit Wasserdampf aus der Wasser-Transportleitung (30) angereichert wird.

7. Verfahren nach Anspruch 5 oder 6, wobei in dem Brennstoffzellen-Modus das Reaktionsprodukt durch den Konvertierungs-Reaktor behandelt wird, oder in einem Nachverbrenner (31) verbrannt wird, um Wasser und Kohlenstoffdioxid zu produzieren, wobei Verlustwärme von dem Nachverbrenner (31) an das Wärmeübertrager-System und/oder an die Wasser-Transportleitung (30) übertragen wird und/oder verwendet wird, um Speisewasser, welches der Wasser-Transportleitung (30) bereitgestellt wird, zu erwärmen, wobei vorzugsweise der Oxidator, der verwendet wird, um Reaktionsprodukte im Nachverbrenner zu verbrennen, Sauerstoff, welcher in dem Elektrolyse-Modus gewonnen wird, und/oder Oxidator-Elektroden-Abgas ist.

8. Verfahren nach Anspruch 6, wobei die Gasturbine (49) und/oder die Wasser-Dampfturbine (35) durch einen Gleichstromwandler oder einen Gleichstromgenerator betrieben werden.

9. Verfahren nach einem der Ansprüche 5 bis 8, wobei in dem Brennstoffzellen-Modus Wasser in dem Reaktionsprodukt in einem Kondensator (33) kondensiert wird und Kohlenstoffdioxid in dem Reaktionsprodukt komprimiert und abgekühlt wird, bis das Kohlenstoffdioxid verflüssigt ist, und dann in einem Kohlenstoffdioxid-Speicher (34) gespeichert wird.

10. Verfahren nach einem der Ansprüche 5 bis 9, wobei in dem Brennstoffzellen-Modus Synthesegas in einer Gasreinigungsvorrichtung (27) gereinigt wird und dem Reaktor (14) bereitgestellt wird, um Kohlenwasserstoff-Brennstoff zu produzieren und wobei Wärme, welche während der Erzeugung von Kohlenwasserstoff-Brennstoff produziert wird, verwendet wird, um Wasser in Druckkessel (13) zu kochen und wobei ein Anteil von 0 bis 100% des Kohlenwasserstoff-Brennstoffs mit dem Synthesegas, welches der Brennstoffelektrode (2b) bereitgestellt wird, gemischt wird.

11. Verfahren nach einem der Ansprüche 5 bis 10, wobei das Synthesegas durch eine biologische oder thermochemische Reaktion produziert wird und wobei Verlustwärme an das Wärmeübertrages-System übertragen wird und/oder verwendet wird, um Wasser in dem Druckkessel (13) zu verdampfen.

## Revendications

1. Système de piles à combustible comprenant au moins une pile à combustible réversible (2) agencée pour fonctionner de manière cyclique ou alternative dans un mode de pile à combustible afin de générer de l'énergie électrique et un produit réactif à partir d'un combustible et d'un oxydant et dans un mode d'électrolyse afin de générer de l'hydrogène et un oxydant à partir du produit réactif, une chaudière à pression (13), la chaudière à pression (13) comportant un réacteur (14) pour générer un combustible hydrocarboné, un dispositif de stockage de gaz de synthèse (11) relié à une entrée d'électrode de combustible (3) de la pile à combustible réversible (2) par l'intermédiaire d'un conduit de gaz de synthèse (12), une sortie d'électrode de combustible (4) de la pile à combustible réversible (2) reliée à un conduit de produit réactif (10), un dispositif de stockage d'oxydant (53), relié à l'entrée d'électrode d'oxydant (5) de la pile à combustible réversible (2) par l'intermédiaire d'un conduit d'oxydant (7), une sortie d'électrode d'oxydant (6) reliée à un conduit d'échappement d'électrode d'oxydant (9), et un système d'échangeur de chaleur pour recevoir et libérer de la chaleur, dans lequel
- le conduit de gaz de synthèse (12), le conduit de produit réactif (10), le conduit d'oxydant (7) et le conduit d'échappement d'électrode d'oxydant (9) sont guidés à travers la chaudière à pression (13), et où
- la chaudière à pression (13) est intégrée dans un conduit de transport d'eau (30).

2. Système de pile à combustible de la revendication 1, dans lequel le conduit de transport d'eau (30) comprend une turbine à vapeur d'eau (35).

3. Système de pile à combustible de la revendication 1 ou 2, comprenant un dispositif de stockage d'hydrogène (45) pour stocker l'hydrogène produit dans la pile à combustible réversible (2) fonctionnant dans le mode d'électrolyse.

4. Système de pile à combustible selon l'une des revendications précédentes,
- comprenant un dispositif de stockage d'oxygène (46) pour stocker l'oxygène produit dans la pile à combustible réversible (2) fonctionnant dans le mode d'électrolyse et/ou
- comprenant un condenseur pour condenser l'eau n'ayant pas réagi et/ou
- dans lequel le conduit de gaz de synthèse (12) comprend un dispositif de purification de gaz (27) et/ou un compresseur (28) pour purifier et/ou comprimer un gaz de synthèse et/ou
- dans lequel le conduit de transport d'eau (30) est relié au conduit de gaz de synthèse (12) et/ou
- comprenant un conduit de circulation d'électrode d'oxydant pour faire circuler les gaz d'échappement d'électrode d'oxydant à travers la pile à combustible réversible (2) et/ou un conduit de circulation d'électrode de combustible (91) pour faire circuler les gaz d'échappement d'électrode de combustible à travers la pile à combustible réversible (2) et/ou
- dans lequel le conduit de produit réactif (10) comprend un dispositif de réaction qui peut être utilisé comme dispositif de post-combustion (31) pour brûler le produit réactif dans le mode de pile à combustible afin de produire de l'eau et du dioxyde de carbone ou un réacteur de conversion haute température (95) et/ou
- dans lequel le conduit de produit réactif (10) et/ou le conduit d'oxydant (9) comprend/comprennent une turbine à gaz (49) ou un détendeur et/ou
- dans lequel le conduit de produit réactif (10) est relié au système d'échangeur de chaleur et/ou comprend un condenseur (33) pour condenser l'eau dans le produit réactif dans le mode de pile à combustible et/ou
- comprenant un dispositif de séparation de dioxyde de carbone et/ou un dispositif de stockage de dioxyde de carbone (34) et/ou
- dans lequel le conduit de gaz de synthèse (12) est relié à un conduit de circulation d'électrode de combustible (91) et/ou
- dans lequel une sortie de réacteur est reliée au conduit de gaz de synthèse (12) et/ou
- comprenant un dispositif de génération de gaz de synthèse selon une réaction biologique ou thermochimique.

5. Procédé de fonctionnement d'un système de pile à combustible comprenant au moins une pile à combustible réversible (2) agencée pour fonctionner de manière cyclique ou alternative dans un mode de pile à combustible afin de générer de l'énergie électrique et un produit réactif à partir d'un combustible et d'un oxydant et dans un mode d'électrolyse afin de générer de l'hydrogène et un oxydant à partir du produit réactif, une chaudière à pression (13), la chaudière à pression (13) comportant un réacteur (14) pour générer un combustible hydrocarboné, un dispositif de stockage de gaz de synthèse (11) relié à une entrée d'électrode de combustible (3) de la pile à combustible réversible (2) par l'intermédiaire d'un conduit de gaz de synthèse (12), une sortie d'électrode de combustible (4) de la pile à combustible réversible (2) reliée à un conduit de produit réactif (10), un dispositif de stockage d'oxydant (53), relié à l'entrée d'électrode d'oxydant (5) de la pile à combustible réversible (2) par l'intermédiaire d'un conduit d'oxydant (7), une sortie d'électrode d'oxydant (6) reliée à un conduit d'échappement d'électrode d'oxydant (9), et un système d'échangeur de chaleur pour stocker et libérer de la chaleur, dans lequel
- le conduit de gaz de synthèse (12), le conduit de produit réactif (10), le conduit d'oxydant (7) et le conduit d'échappement d'électrode d'oxydant (9) sont guidés à travers la chaudière à pression (13), et où
- la chaudière à pression (13) est intégrée dans un conduit de transport d'eau (30), où
- dans le mode de pile à combustible, le gaz de synthèse est fourni du dispositif de stockage de gaz de synthèse (11) à l'électrode de combustible (2b), l'oxydant est fourni du dispositif de stockage d'oxydant (53) à l'électrode d'oxydant (2a), et le produit réactif, l'eau et l'électricité sont produits, où
∘ la chaleur résiduelle provenant du produit réactif est transférée au système d'échangeur de chaleur, où
∘ la chaleur résiduelle provenant des gaz d'échappement d'électrode d'oxydant est transférée au système d'échangeur de chaleur, où
- dans le mode d'électrolyse, le gaz de synthèse est fourni par l'intermédiaire du conduit de gaz de synthèse (12) au réacteur (14), amené à réagir dans le réacteur (14) pour produire un combustible hydrocarboné, et la chaleur résiduelle provenant de la réaction de production de combustible hydrocarboné est utilisée pour évaporer l'eau dans la chaudière à pression (13), où
∘ l'eau est fournie à la pile à combustible réversible (2) et est électrolysée pour produire de l'hydrogène et de l'oxygène.

6. Procédé de la revendication 5, dans lequel
- le conduit de transport d'eau (30) comprend une turbine à vapeur d'eau (35), et dans lequel l'eau évaporée est au moins partiellement détendue dans la turbine à vapeur d'eau (35) et/ou
- dans lequel, dans le mode d'électrolyse, l'hydrogène produit dans la pile à combustible réversible (2) ou stocké dans un dispositif de stockage d'hydrogène (45) est fourni au réacteur (14) pour supporter la génération de combustible hydrocarboné et/ou
- dans lequel, dans le mode d'électrolyse, l'oxygène produit dans la pile à combustible réversible (2) est stocké dans un dispositif de stockage d'oxygène (46) et la chaleur résiduelle provenant de l'oxygène est transférée au système d'échangeur de chaleur et/ou
- dans lequel, dans le mode d'électrolyse, l'eau n'ayant pas réagi provenant de la réaction d'électrolyse est condensée et comprimée et la chaleur résiduelle est transférée au système d'échangeur de chaleur et/ou dans lequel dans le mode d'électrolyse des flux de gaz provenant de l'électrode d'oxydant (2a) et/ou de l'électrode de combustible (2b) sont refroidis par le système d'échangeur de chaleur, l'eau est condensée et l'hydrogène et/ou l'oxygène est/sont comprimé(s) pour le stockage et/ou
- dans lequel, dans le mode d'électrolyse, le dioxyde de carbone est fourni à la pile à combustible réversible (2) et le méthane est généré dans l'électrode de combustible de la pile à combustible réversible (2) par la réaction du dioxyde de carbone et de l'hydrogène et/ou
- dans lequel, dans le mode de pile à combustible ou dans le mode d'électrolyse, des flux de gaz provenant de l'électrode d'oxydant (2a) et/ou de l'électrode de combustible (2b) de la pile à combustible réversible (2) sont détendus dans une turbine à gaz (49) ou un détendeur et/ou
- dans lequel, dans le mode de pile à combustible, le gaz de synthèse à fournir à l'électrode de combustible (2b) est purifié dans un dispositif de purification de gaz (27) et/ou comprimé dans un compresseur (28), dans lequel la chaleur résiduelle provenant du gaz de synthèse comprimé est utilisée pour vaporiser l'eau dans la chaudière à pression (13) et/ou
- dans lequel, dans le mode de pile à combustible, le gaz de synthèse à fournir à l'électrode de combustible (2b) est enrichi en vapeur d'eau provenant du conduit de transport d'eau (30).

7. Procédé selon la revendication 5 ou 6, dans lequel, dans le mode de pile à combustible, le produit réactif est traité par un réacteur de conversion ou est brûlé dans un dispositif de post-combustion (31) pour produire de l'eau et du dioxyde de carbone, dans lequel la chaleur résiduelle provenant du dispositif de post-combustion (31) est transférée au système d'échangeur de chaleur et/ou au conduit de transport d'eau (30) et/ou est utilisée pour chauffer l'eau d'alimentation fournie au conduit de transport d'eau (30), dans lequel, de préférence, l'oxydant utilisé pour brûler le produit réactif dans le dispositif de post-combustion (31) est l'oxygène obtenu dans le mode d'électrolyse et/ou est les gaz d'échappement d'électrode d'oxydant.

8. Procédé selon la revendication 6, dans lequel la turbine à gaz (49) et/ou la turbine à vapeur d'eau (35) est/sont actionnée(s) par un convertisseur de courant continu ou un générateur de courant continu.

9. Procédé de l'une des revendications 5 à 8, dans lequel dans le mode de pile à combustible, l'eau dans le produit réactif est condensée dans un condenseur (33) et le dioxyde de carbone dans le produit réactif est comprimé et refroidi jusqu'à ce que le dioxyde de carbone soit liquéfié et en suite stocké dans un dispositif de stockage de dioxyde de carbone (34).

10. Procédé de l'une des revendications 5 à 9, dans lequel, dans le mode de pile à combustible, le gaz de synthèse est purifié dans un dispositif de purification de gaz (27) et fourni au réacteur (14) pour produire un combustible hydrocarboné et la chaleur produite pendant la génération de combustible hydrocarboné est utilisée pour faire bouillir l'eau dans la chaudière à pression (13) et une part comprise entre 0 et 100% du combustible hydrocarboné est mélangée avec le gaz de synthèse à fournir à l'électrode de combustible (2b).

11. Procédé de l'une des revendications 5 à 10, dans lequel le gaz de synthèse est produit par une réaction biologique ou thermochimique et la chaleur résiduelle est transférée au système d'échangeur de chaleur et/ou est utilisée pour évaporer l'eau dans la chaudière à pression (13).
